(19) Europäisches Patentamt
European Patent Office
Office européen des brevets

(11) **EP 2 788 738 B1**

(12) **EUROPEAN PATENT SPECIFICATION**

(45) Date of publication and mention
of the grant of the patent:
**22.05.2019 Bulletin 2019/21**

(51) Int Cl.:
**G01N 21/31** (2006.01)　　**G01N 21/63** (2006.01)
**G01J 3/42** (2006.01)　　**F23N 5/00** (2006.01)

(21) Application number: **12855987.9**

(22) Date of filing: **22.11.2012**

(86) International application number:
**PCT/FI2012/051153**

(87) International publication number:
**WO 2013/083871 (13.06.2013 Gazette 2013/24)**

(54) **MEASUREMENT OF ALKALIHALIDES IN COMBUSTION PROCESSES**

MESSUNG VON ALKALIHALIDEN IN VERBRENNUNGSPROZESSEN

MESURE D'HALOGÈNES ALCALINS DANS DES TRAITEMENTS PAR COMBUSTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.12.2011 FI 20116232**

(43) Date of publication of application:
**15.10.2014 Bulletin 2014/42**

(73) Proprietors:
• **VALMET AUTOMATION OY**
**02150 Espoo (FI)**
• **Sumitomo SHI FW Energia Oy**
**02130 Espoo (FI)**

(72) Inventors:
• **SORVAJÄRVI, Tapio**
**FI-37550 Lempäälä (FI)**
• **TOIVONEN, Juha**
**FI-33500 Tampere (FI)**
• **SAARELA, Jaakko**
**FI-02230 Espoo (FI)**
• **MANNINEN, Albert**
**FI-02770 Espoo (FI)**

(74) Representative: **Berggren Oy, Tampere**
**Visiokatu 1**
**33720 Tampere (FI)**

(56) References cited:
**WO-A1-01/27593　　US-A1- 2008 165 363**

• **E SCHLOSSER ET AL: "In situ detection of potassium atoms in high-temperature coal-combustion systems using near-infrared-diode lasers", SPECTROCHIMICA ACTA PART A: MOLECULAR AND BIOMOLECULAR SPECTROSCOPY, vol. 58, no. 11, 1 September 2002 (2002-09-01), pages 2347-2359, XP055215491, ISSN: 1386-1425, DOI: 10.1016/S1386-1425(02)00049-5**
• **EDELSTEIN S A ET AL: "Cross Sections for the Alkali-Metal-Halogen Molecule Reactions: Na, K, Rb, and Cs with 12*", JOURNAL OF CHEMICAL PHYSICS, AMERICAN INSTITUTE OF PHYSICS, US, vol. 55, no. 11, 1 January 1971 (1971-01-01), pages 5164-5170, XP008176803, ISSN: 0021-9606**
• **MONKHOUSE, P.: 'On-line spectroscopic and spectrometric methods for the determination of metal species in industrial processes' PROGRESS IN ENERGY AND COMBUSTION SCIENCE vol. 37, no. 2, 23 June 2010, ISSN 0360-1285 pages 125 - 171, XP028136036**
• **SCHLOSSER, E. ET AL.: 'Diode laser based in situ detection of alkali atoms: development of a new method for determination of residence-time distribution in combustion plants' APPLIED PHYSICS B vol. 75, 02 September 2002, pages 237 - 247, XP055071534**
• **WOLFRUM, J.: 'Laser Induced Chemical Reactions in Combustion and Industrial Processes' LASER CHEMISTRY vol. 6, no. 2, 1986, pages 125 - 147, XP003031232**

• SORVAJäRVI, T. ET AL.: 'Optical detection of potassium chloride vapor using collinear photofragmentation and atomic absorption spectroscopy' OPTICS LETTERS vol. 37, no. 19, 01 October 2012, ISSN 0146-9592 pages 4011 - 4013, XP001578693

**Description**

Field of the Invention

The invention relates to a method for measuring alkalihalides from flue gas. The invention further relates to a device arranged to measure alkalihalides from flue gases. The invention further relates to a boiler comprising the device.

Background of the Invention

Environmental aspects and the increasing price of the fossil fuels has increased the interest in renewable fuels in power production. One alternative, as a largely $CO_2$ neutral fuel, is biomass. Biomass may be e.g. harvested as residues from forest industry. In addition, the biomass may comprise at least one of agricultural waste, peat, stubs, stumps, branches, and waste wood such as bark, wooden construction debris, and wood product residuals. However, combustion of biomass causes corrosion and slagging problems in combustion boilers. One cause of the problems are alkali chloride vapors, which are formed during combustion due to the high alkali and chloride content of the biomass. In order to quantify the corrosion problem, the alkali chloride content of the flue gases needs to be measured.

In general, optical spectroscopy may be utilized to measure the content of harmful gases from the flue gases. Methods include absorption spectroscopy, wherein the attenuation of light is measured. As different gaseous compounds absorb light differently, the attenuation spectrum may be used to deduce the content of different gaseous compounds. The sensitivity of the method is relatively low, being in the ppm (parts per million, $10^{-6}$) range. This is partly due to low absorption of the gases and partly due to fluctuations in the flue gas.

For example, the publication WO01/27593 discloses an optical method for measuring the concentration of harmful gases in the flue gases through a heat-producing plant. The method is based on the harmful gas absorbing ultraviolet light.

Moreover, E. Schlosser et al. (E SCHLOSSER ET AL: "In situ detection of potassium atoms in high temperature coal-combustion systems using near-infrared-diode lasers", SPECTROCHIMICA ACTA PART A: MOLECULAR AND BIOMOLECULAR SPECTROSCOPY, vol. 58, no. 11, 1 September 2002 (2002-09-01), pages 2347-2359, XP055215491, ISSN: 1386-1425, DOI: 10.1 016/S1386-1425(02)00049-5) has user laser absorption spectroscopy to measure potassium (K) atom concentrations in situ in a high temperature.

Optical methods include also those based on Excimer Laser Induced Fluorescence. In these methods, the alkali chloride molecules are dissociated, and the released alkali atom is excited using an excimer laser. As the alkali atom relaxes from the excited state, a photon is emitted. The wavelength of the photon corresponds to the alkali species and the alkali content is measured from the emission spectrum. In principle, the sensitivity of the method is in the ppb (parts per billion, $10^{-9}$) range. However, in a combustion environment, scattering of light e.g. from soot particles, dilutes the sensitivity of the methods.

Penelope Monkhouse (MONKHOUSE, P.: "On-line spectroscopic and spectrometric methods for the determination of metal species in industrial processes", PROGRESS IN ENERGY AND COMBUSTION SCIENCE, vol. 37, no. 2, 23 June 2010 (2010-06-23), pages 125-171, XP028136036) has reviewed on-line methods for determining metal species. Such methods include absorption (tunable diode laser and differential absorption spectroscopies) and emission (spontaneous atomic emission, laser induced fluorescence, photofragment fluorescence as well as several varieties of plasma spectroscopy), in addition to on-line ionisation methods (molecular beam and single particle mass spectrometry and surface ionisation).

Summary of the Invention

A method for measuring alkalihalide content of flue gas is presented. By the method, a sensitivity in the ppb ($10^{-9}$) range can be achieved. The method is characterized by the technical features of claim 1. Other features of the method are disclosed in the dependent claims 2-7.

For the application of the method, a device for measuring the alkalihalide content of flue gas is disclosed. The device is characterized by the features of claim 8. Other aspects of the device are disclosed in claims 9-13.

The device may also be comprised in a boiler. The boiler is characterized by the features of the dependent claims 14 and 15.

Description of the Drawings

Fig. 1a                shows a side view of a boiler,

Fig. 1b      shows a bypass for flue gases,

Figs. 2a-2d      show some optical paths between an optical inlet and an optical outlet of a boiler,

Fig. 3      shows a measurement arrangement in a boiler,

Fig. 4a      shows fluctuations in the measurement signal in a 10 s time scale,

Fig. 4b      shows an idealized measurement signal,

Fig. 4c      shows measured signals and fluctuations in the signal in a 10 $\mu$s time scale,

Fig. 5      shows dissociating a potassium chloride molecule to a potassium atom and a chlorine atom using a light pulse comprising a photon having the wavelength $\lambda_2$,

Fig. 6      shows the absorption cross section of potassium atoms as function wavelength in air after dissociation,

Fig. 7      shows another measurement arrangement in a boiler,

Fig. 8      shows another measurement arrangement in a boiler,

Fig. 9a      shows a preferred measurement arrangement in a boiler,

Fig. 9b      shows a use of a prism to guide the optical beam and the optical pulse to the same optical paths,

Fig. 9c      shows another measurement arrangement, wherein the measuring device is located in the measurement space,

Fig. 9d      shows another measurement arrangement, wherein the measuring device is arranged partly in the measurement space, and

Figs.10a and 10b      show integrated light sources.

Detailed Description of the Invention

A method and a device for measuring the alkalihalide content of flue gas is disclosed. Flue gas comprises gaseous compounds and solid particles. The gaseous compounds comprise the alkalihalides of which content in the gaseous compounds of the flue gas is to be measured. Measurement is based on absorption spectroscopy. In the method, a light beam is generated, the light beam is guided through the flue gases to be measured, along an optical path, whereby a part of the light is absorbed and scattered by the flue gases, and the intensity of the light beam having passed through the flue gas is measured. Other steps of the method will be described in more detail later. The steps of the method are preferably performed in the vicinity of a boiler. The boiler may comprise an optical inlet such a hole or a window, through which the light beam may be guided into the boiler. The boiler may be arranged to burn biomass, as discussed in the background. In addition, the boiler may be arranged to burn fossil fuels such as oil, waste such as municipal waste, or any burnable fuels. An incineration plant may be considered to be a boiler. A boiler may also comprise a heat exchanger arranged to heat a heat transfer medium (e.g. to boil water, from which the term "boiler" is derived).

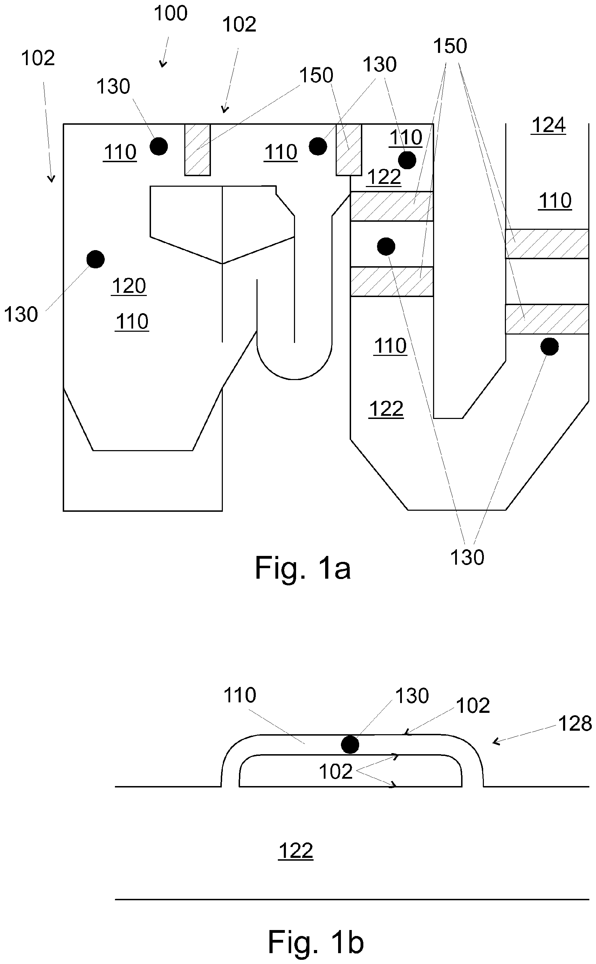

Figure 1 shows an embodiment of a boiler 100. The boiler comprises walls 102. The term "wall" is used only to describe an element separating the interior of the boiler and the exterior of the boiler. Therefore, also the ceiling and the floor are considered walls 102. In the interior of the boiler a space 110 is formed. The space 110 may comprise e.g. a combustion space 120, a flue gas channel 122, and/or a chimney 124. As depicted in Fig. 1b, the boiler may comprise a bypass 128, e.g. for the flue gas duct 122. Also the interior of the bypass 128 belongs to the space 110, and is surrounded by the boiler walls 102. The boiler 100 comprises heat exchangers 150 located in the space 110. A heat exchanger 150 may be e.g. a superheater device, an economizer, an air pre-heater, or a feed-water pre-heater. The boiler 100 comprises, in at least one wall 102, at least one optical inlet 130, such as a window 140 or a hole 132, for optical measurements. A window 140 is transparent so that light can propagate through the window. Preferably the light of the measuring light beam is not significantly attenuated while travelling through the window. The wavelength of the light beam will be defined in more detail later. The boiler 100 may comprise at least one optical outlet 135, such as a window 140 or a hole 132. The optical inlet 130 may be located in the wall of the bypass 128, as depicted in Fig. 1b. Even if not shown in Fig. 1b, the bypass may comprise a cleaning unit arranged to remove at least part of the solid particles from the flue gas before the optical inlet 130. In case a hole 132 is used as an optical inlet, air or other gas may be blown through the hole 132 into the boiler 100 in order to retain the flue gases in the boiler 100.

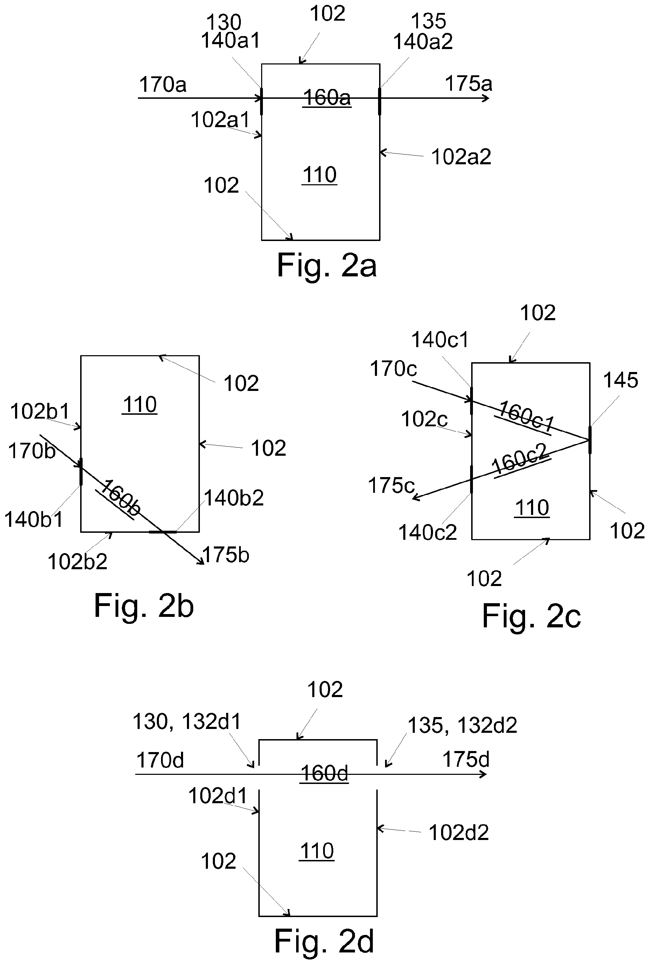

Referring to Figs. 2a-2d, in between an optical inlet 130 and an optical outlet 135, in the space 110, a first optical path 160 is formed so that when the light beam enters the optical inlet 130, the light beam travels through the first optical path 160 to the optical outlet 135. The alkalihalide content is measured from the first optical path 160. In Figs. 2a-2c a window 140 serves as the optical inlet 130 and another window serves as the optical outlet 135. In Fig. 2d, the hole 132d1 serves as the optical inlet 130, and the hole 132d2 serves as the optical inlet 135.

A preferred embodiment for the first optical path 160a is shown in Fig. 2a, wherein a first boiler wall 102a1 comprises a first window 140a1, a second boiler wall 102a2 comprises a second window 140a2, the first boiler wall 102a1 is essentially parallel with the second boiler wall 102a2, and the optical path 160a is essentially perpendicular to the first window 140a1 and the second window 140a2. The windows may be essentially parallel to the boiler wall. The boiler wall 102 may be curved. In a preferred embodiment, the windows 140a1 and 140a2 are essentially planar. A light beam 170a enters and penetrates the first window 140a1, travels along the first optical path 160a to the second window 140a2, enters and penetrates the second window 140a2, and exits the second window as an attenuated light beam 175a. The first optical path 160a extends through the space 110.

Other embodiments are shown in Figs. 2b and 2c. In Fig. 2b, a light beam 170b enters and penetrates the first window 140b1, travels along a first optical path 160b to the second window 140b2, enters and penetrates the second window 140b2, and exits the second window as the attenuated light beam 175b. The first window 140b1 is arranged in an angle with respect to the second window 140b2. In the Fig. 2b, the angle is essentially a right angle. However, also other angles are possible.

In Fig. 2c, a light beam 170c enters and penetrates the first window 140c1, travels along a first part 160c1 of the first optical path to a reflector 145. A part of the boiler wall 102 may act as the reflector 145. The reflector may reflect or scatter the light beam such that at least part of the light beam is guided to a second part 160c2 of the optical path. The reflected or scattered part of the light beam travels along a second part 160c2 of the first optical path to the second window 140c2, enters and penetrates the second window 140c2, and exits the second window as the attenuated light beam 175c. The first optical path comprises its parts 160c1 and 160c2. The first window 140c1 is arranged to a boiler wall 102c, and the second window 140b2 is arranged to the same boiler wall 102c. If a reflector 145 is used, a window 140 may operate both as the first window and as the second window, i.e. as both the optical inlet 130 and the optical outlet 135 (not shown).

In Fig. 2d, a light beam 170d penetrates a first hole 132d1 (the optical inlet 130), travels along the first optical path 160d to a second hole 132d2 (the optical outlet 135), and exits the second hole 132d2 as the attenuated light beam 175d. A hole 132 may be used instead of a window also in the embodiments of Figs. 2b and 2c. Moreover, one hole 132 may serve both as the optical inlet 130 and as the optical outlet 135. The boiler walls 102 in Fig. 2d are arranged as discussed in the context of Fig. 2a.

In Figs. 2a-2d, the first optical path 160 is located optically between the optical inlet 130 and the optical outlet 135. In case a reflector 145 is used, the optical path is not necessarily physically between the optical inlet and the optical outlet, as illustrated in Fig. 2c. The wording "optically between" means that light entering the optical inlet may travel along the first optical path to the optical outlet (or the optical inlet, if a hole or a window acts both as the optical inlet and as the optical outlet).

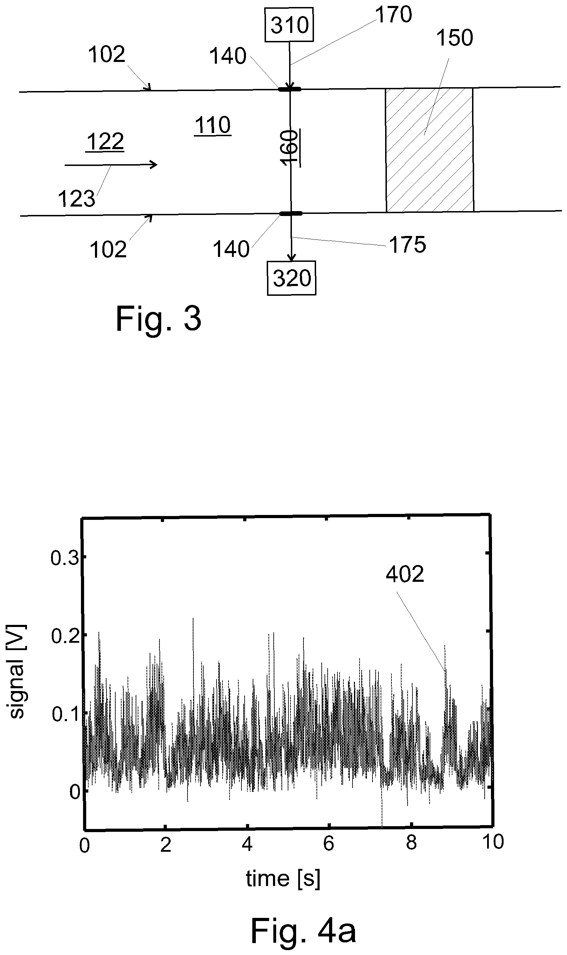

Figure 3 shows the configuration corresponding to Fig. 2a in the vicinity of a flue gas duct 122. The direction of flue gas flow is indicated with the arrow 123. A heat exchanger 150 is arranged in the flue gas duct 122 downstream of the window 140. Thus, the window 140 may be arranged upstream from a heat exchanger 150. The window 140 may also be arranged downstream of another heat exchanger. The heat exchanger 150 may be e.g. a superheater. The figure shows also a light beam source 310. The light beam source 310 emits a light beam 170. The light beam source 310 comprises a light source. The light beam source 310 may further comprise optical elements such as reflectors or lenses to form the light beam. The light beam source 310 may comprise a laser. After having travelled through the first window 140 and along the optical path 160, an attenuated light beam 175 exits the second window 140. The intensity of the attenuated light beam 175 is detected with a photodetector 320.

Having described preferable environments for the measurement configuration in the vicinity of a boiler 100, the measurement principle will be described in more detail. The measurement is based on absorption spectroscopy. Thus, the alkalihalide content of the flue gases in the space 110 is measured by measuring the attenuation of the light beam 170, as the light beam 170 travels through the space 110. To measure the attenuation, a value indicative of the intensity of the attenuated light beam 175 is measured.

To overcome the problems indicated in the background, the sensitivity of the measurements is increased in two ways:

(1) by shortening the measurement time in order to obtain temporarily stationary measurement conditions, and
(2) by increasing absorption of the flue gas corresponding to the wavelength(s) of the light beam 170.

The method comprises:

- generating a light beam 170, wherein the first light beam 170 comprises photons having a first wavelength $\lambda_1$,
- guiding the light beam 170 to a first optical path 160, wherein
  ∘ the first optical path 160 runs through a space 110 containing flue gases, whereby the light beam 170 is attenuated to an attenuated light beam 175, and
- detecting a first value indicative of a first intensity $I_{k0}$ of the attenuated light beam 175.

The first value indicative of a first intensity, $I_{k0}$, of the attenuated light beam 175 may be e.g. the signal level of the photodetector 320 corresponding to the first intensity, $I_{k0}$. Other possibilities, e.g. averaging will be discussed below.

In a combustion environment, e.g. in the flue gas duct 122, or in the combustion space 120, the fluctuations tend to affect measurements. E.g. with absorption spectroscopy, the flue gases may contain various amounts of solid particles travelling across the optical path 160, thereby affecting intensity of the attenuated light beam 175. Fluctuations are clearly seen in a time scale of the order of a second (s). However, when the time scale is shortened, e.g. to the order of a microsecond ($\mu$s), the fluctuations are not present. It is noted, that if the flow velocity of the flue gas is e.g. 10 m/s, the particles in the flue gas travel only 10 $\mu$m in a microsecond. Thus, if the size of the light beam is significantly larger than, say 10 $\mu$m, the fluctuations diminish. Therefore, a short time scale in combination with a relatively wide light beam diminishes fluctuations.

The light beam 170 has a cross section, and the cross section has a first dimension $I_1$ and a second dimension $I_2$, wherein the second dimension is perpendicular to the first dimension. The orientations for the dimensions are selected such that the first dimension is the smaller of the first and the second dimension, i.e. $I_1=min(I_1,I_2)$. The dimensions may be equal, e.g. the beam may be circular. Theoretically there is no limit for the dimensions of the light beam 170. However, a narrow light beam expands more in the interior of a boiler than a wide light beam. For example, turbulence in the boiler affect the temperature distribution in the optical path, thereby affecting the refraction coefficient for light and further affecting the travel of the light beam. Moreover, a very wide light beam may diminish the sensitivity of the method. The first dimension of the light beam may be e.g. in the range from 1 mm to 100 mm. The first dimension $I_1$ of the light beam is preferably from 20 mm to 50 mm. In some embodiments of the invention, the light beam 170 has an essentially circular cross-section. In these embodiments, the radius of the light beam 170 is preferably in the range from 10 mm to 25 mm.

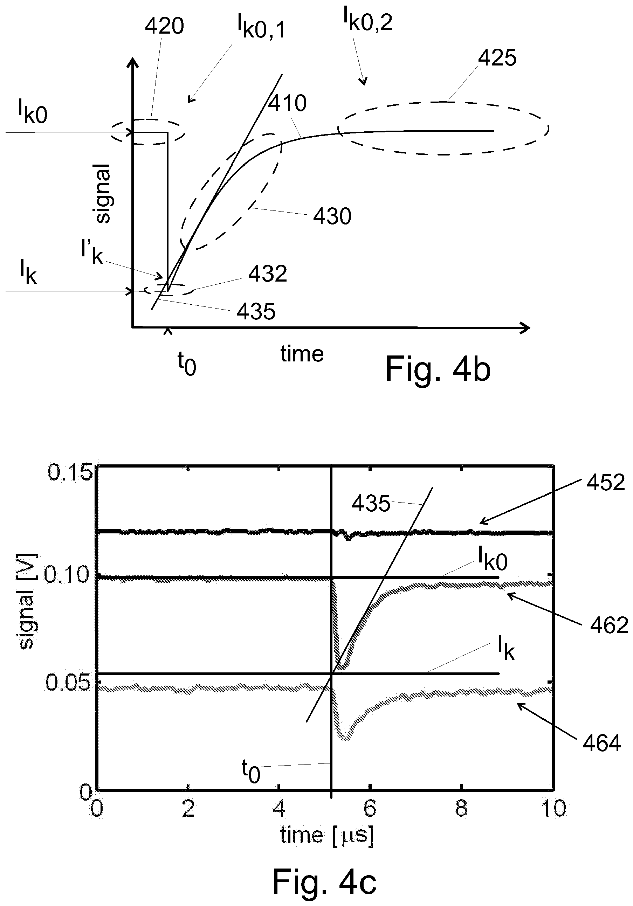

Figures 4a and 4c show the signal at the photodetector 320 in measurements, where the intensity of the light beam 170 is kept constant. In the figures, the signal is proportional to the intensity of the attenuated light beam 175. In case the photodetector 320 has a nonlinear response, the intensity level may be deduced from the signal level using calibration information for the photodetector. Fig. 4a shows an intensity signal 402, as measured using a photodetector 320 in the time scale of 10 s. As seen from Fig. 4a, the fluctuations are relatively high during the time period. The signal level ranges from about 0 V to about 0,2 V. However, as seen from Fig. 4c, the fluctuations are hardly visible in a time scale of 10 $\mu$s. Fig. 4c shows three intensity signals 452, 462, and 464 as measured using a photodetector 320 in the time scale of 10 $\mu$s. As seen from the signal 452, the fluctuations are hardly visible. The drop in the signals 462 and 464 will be discussed later.

In the method, the sensitivity is also improved by increasing the absorption of the flue gas for the first wavelength $\lambda_1$. The absorption is increased by dissociating alkalihalide molecules on the first optical path 160 to alkali atoms and halogen atoms. At least part of the alkalihalide molecules on the first optical path 160 are dissociated to alkali atoms and halogen atoms. The term alkalihalide refers to a molecule of the type MH, wherein M is an alkali atom (metal), excluding hydrogen, from the group IA of periodic table of elements and H is a halogen atom from the group VIIA of the periodic table of elements. Specifically, the metal M can be selected from the group of Li, Na, K, Rb, Cs, and Fr, and the halogen H can be selected from the group of F, Cl, Br, I, and At. Even more specifically M can be lithium, sodium or potassium, while H can be chlorine or bromine.

The alkalihalide molecules are dissociated using a light pulse. The light pulse comprises photons of which energy is sufficient for dissociating at least some alkalihalide molecules. For alkali iodides, a photon having the wavelength of 420 nm or less may dissociate the alkalihalide molecule. For alkali bromides, a photon having the wavelength of 370 nm or less may dissociate the alkalihalide molecule. For alkali chlorides, a photon having the wavelength of 320 nm or less may dissociate the alkalihalide molecule. Therefore, the light pulse may comprise photons having a wavelength of less than 420 nm. The dissociation process is not sensitive to the wavelength, provided that the wavelength is short enough. However, the absorption spectrum of an alkalihalide molecule is indicative of a probability for a photon having a wavelength to be absorbed by the alkalihalide molecule. Thus, even if dissociation is not sensitive to the wavelength, dissociative photons having a wavelength may dissociate more molecules than the same number of dissociative photons having a different wavelength. Therefore, the light pulse is not necessarily monochromatic. However, the light pulse may be essentially monochromatic, whereby the light pulse may consist of photons having the same wavelength. The wavelength for the light pulse may be selected using the absorption spectrum of an alkalihalide molecule and/or using the price (or other) information on available light sources. The light pulse may be essentially coherent.

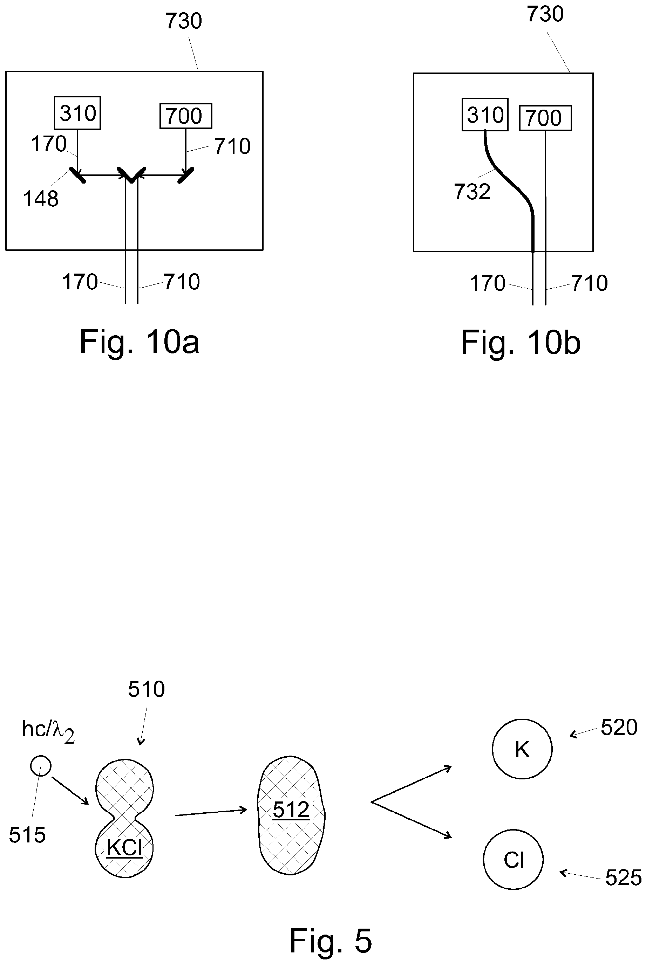

In the following, the light pulse is assumed to be monochromatic or essentially monochromatic and assumed to have second wavelength $\lambda_2$. The process of dissociation is shown schematically in Fig. 5. The flue gas comprises alkalihalide molecules 510, such as potassium chloride, KCl. A high-energy photon having the wavelength $\lambda_2$ and energy $hc/\lambda_2$ is used to dissociate the alkalihalide molecule 510. The alkalihalide molecule 510 absorbs the photon 515, whereby the photon 515 excites the alkalihalide molecule 510 to an excited alkalihalide molecule 512. The excited alkalihalide molecule 512 is in an unstable state. Therefore, the excited alkalihalide molecule 512 dissociates to an alkali atom 520, such as potassium, and a halogen atom 525, such as chlorine. For the case of KCl, the wavelength $\lambda_2$ is preferably from 230 nm to 290 nm, e.g. about 270 nm. Therefore the pulse light source may be selected from a wide range of light sources. In an embodiment, a pulse laser having the wavelength $\lambda_2$=266 nm was used as the light pulse source. The absorption spectrum of the alkalichloride molecule shows a relatively high value for this specific wavelength. It is further noted, that photons having this specific wavelength do not significantly dissociate other potassium compounds that may be present in the boiler, e.g. potassium hydroxide, KOH.

For alkali atoms, the absorption shows a clear peak at some wavelength or clear peaks at some wavelengths, as known from literature. A wavelength corresponding to the absorption profile of an alkali atom 520 may be used as the wavelength $\lambda_1$. As the absorption is measured, the light beam 170 comprises photons having the first wavelength $\lambda_1$. The wavelength $\lambda_1$ corresponds to the absorption profile provided that the absorption cross section of the alkali atom 520 for the wavelength $\lambda_1$ is greater than 1/1000 (one thousandth) of the maximum absorption cross section. Preferably the first wavelength $\lambda_1$ corresponds to the absorption maximum. Moreover, the light beam 170 used for measurements comprises photons having the first wavelength, but may comprise photons having other wavelengths. In the method, the attenuation of the light beam 170 at this wavelength is detected. The light beam 170 may have an intensity maximum at the first wavelength $\lambda_1$. The light beam may have a relatively narrow wavelength spectrum in the vicinity of the first wavelength.

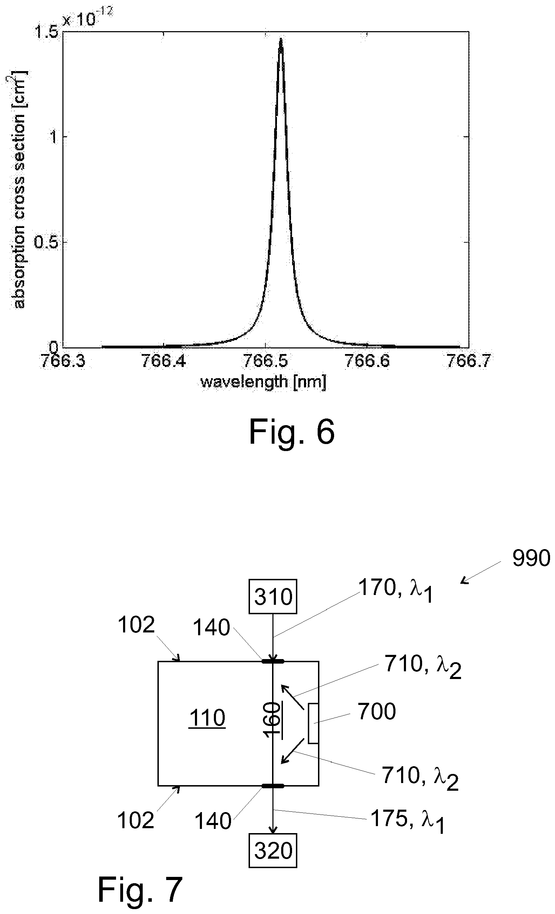

For example, Fig. 6 shows the absorption profile for atomic potassium in air. More specifically, Fig. 6 shows the absorption cross section for atomic potassium in air as a function of wavelength. In Fig. 6, the potassium has been produced by dissociating a potassium chloride molecule. As seen from the figure, the absorption cross section has a clear peak at the wavelength of about 766.5 nm. Therefore, for measurements of potassium chloride, the wavelength $\lambda_1$ =766.515 nm $\pm$ 0.01 nm corresponding to the peak of atomic potassium, may be used as the first wavelength $\lambda_1$. Alternatively, any other wavelength corresponding to the absorption profile of potassium may be used as the first wavelength $\lambda_1$. From the figure, the absorption cross section for atomic potassium seems to be greater than $0.001 \times 1.47 \times 10^{-12}$ cm$^2$ (i.e. one thousandth of the maximum) for approximately 766.5 nm $\pm$ 0.15 nm.

The location (i.e. wavelength) of the absorption peak of potassium depends on pressure. Moreover, the alkali atom, as obtained by dissociating an alkalihalide molecule, has a large velocity, since part of the energy released in the dissociation is transformed to the kinetic energy of the alkali atom. Therefore, the wavelength corresponding to the absorption peak in vacuum is slightly different from the value presented above. In vacuum, the absorption cross section has a clear peak at the wavelength of about 766.7 nm. In addition, potassium has absorption peaks e.g. at around 770 nm and around 404 nm. Alternatively to the specified wavelength, either of these wavelengths could serve as the first wavelength. The light source used to generate the light beam is preferably tunable such that the wavelength can be accurately tuned to correspond the absorption peak.

The light beam source 310 may produce a monochromatic or essentially monochromatic light beam 170. The light beam source 310 may produce a coherent or essentially coherent light beam 170. It is noted, that even if a laser is used as the light source 310, and the light beam 170 is essentially coherent, scattering from the particles in the flue gas in the space 110 widens the light beam in the space 110. It is further noted that for atomic sodium, the absorption cross section has peaks e.g. at around 589 nm, 330 nm, and 285 nm.

Figure 7 shows an embodiment of a device 990 for measuring the alkalihalide content of flue gas. As the alkalihalide content of the flue gas in the space 110 is being measured, the first wavelength $\lambda_1$ of the light beam 170 is selected such that the alkali atom content can be measured. The wavelength for potassium was discussed above. As the alkalihalide content is measured from the absorption, the alkalihalide content on the first optical path 160 becomes measured.

The device 990 of Fig. 7 comprises a light pulse source 700. The light pulse source is arranged to emit light pulses 710 comprising high energy photons such that at least some of the photons dissociate the alkalihalide molecules on the first optical path 160. The light pulse source 700 may be arranged to emit light pulses 710 comprising photons having a wavelength $\lambda_2$, wherein $\lambda_2$ is short enough for the dissociating alkalihalide molecules. The light pulses dissociate at least part of the alkalihalide molecules, as discussed above. At least part of the light pulses are guided to the first optical path 160. As light pulse 710 or a part of the light pulse 710 travels across the first optical path 160, at least part of the alkalihalide molecules on the first optical path 160 are being dissociated to alkali atoms. As the first wavelength of the light beam 170 is selected to match the alkali atom absorption peak, the dissociation shows in intensity of the attenuated light beam 175. Namely, the intensity decreases, corresponding to the amount of dissociated alkalihalide molecules on the first optical path 160. This is shown in Figs. 4b and 4c. The curve 410 in Fig. 4b and the curves 462 and 464 in Fig. 4c show measurements of the intensity of the attenuated light beam 175. The sharp drop in the intensity corresponds to dissociation, wherein the alkali atom content is rapidly increased. The alkali atoms may move away from the first optical path e.g. with flue gases. Furthermore, the alkali atoms are highly reactive. Moreover, the halogen atoms are highly reactive. Therefore, the alkali atoms rapidly react with other substances in the flue gas, or move away from the first optical path 160, thereby increasing the intensity back to the original level, as shown in the figures. 4b and 4c.

Referring to Fig. 4b, the light pulse 710 dissociates part of the alkalihalide molecules at the time of $t_0$, which shows as a sharp drop in the curve 410. The signal returns to its initial level relatively rapidly. The time in which the signal returns to its original level is referred to as the recovery time. Referring to Fig. 4c, the recovery time for potassium and in flue gases may be of the order of 2 $\mu$s. The period, in which alkali atoms are located on the first optical path 160, the alkali atoms having been produced by dissociating the alkalihalide molecules, is correspondingly referred to as the recovery period. The signal level before dissociating alkalihalide molecules is denoted by $I_{k0}$, and the signal level immediately or essentially immediately after dissociating the alkalihalide atoms is denoted by $I_k$. The intensity $I_k$ also correspond to a local minimum of the intensity signal. During the recovery period, the intensity of the attenuated light beam 175 has further decreased, as compared to the situation before the recovery period, due to the alkali atoms that are located on the first optical path 160, the alkali atoms having been produced by dissociating the alkalihalide molecules.

The intensity signal before dissociating the molecules, $I_{k0,1}$, equals or approximately equals to the signal after a long time after dissociating the molecules, $I_{k0,2}$. In principle, the intensity $I_{k0}$ can be measured before the dissociative light pulse or after the light pulse and after the recovery time. However, as one technical advantage of the method is the short measurement time, preferably the intensity $I_{k0}$ is measured right before the dissociative light pulse.

The method comprises detecting a first value indicative of a first intensity $I_{k0}$ of the attenuated light beam 175. The first value indicative of the first intensity $I_{k0}$ may be e.g. an average of several measured signals. For example the first value may be an average of several measured signals before the dissociation, as shown in the figure 4b with the reference number 420. As another example, the first value may be an average of several measured signals a long time after the dissociation, as shown in the figure 4b with the reference number 425.

The method further comprises detecting a second value indicative of a second intensity $I_k$ of the attenuated light beam 175 during the recovery period, i.e. after dissociating at least part of the alkalihalide molecules 525 on the first optical path 160. The second value may be a local minimum value of the signal 410. The second value may be an average of several measured signals near the local minimum, as shown in the figure 4b with the reference number 432. It is also possible to fit a function to the measured data, particularly to the increasing part of the measured data. The increasing part of the measured data is shown in the figure 4b with the reference number 430. As an example of the function, a line 435 may be fitted to the data. The second value indicative of the second intensity $I_k$ of the attenuated light beam 175 may be detected using this function. In Fig. 4b, a possibility for the second value is denoted by $I'_k$. The value $I'_k$ is obtained as the value of the fitted function (the line 435) at the time $t_0$. Also other functions may be fitted to increasing part of the measured data, e.g. an exponential function or a polynomial.

The measured data may be filtered prior to detecting the first or the second value. For example, instead of the measured signal, a moving average of the signal may be used. Alternatively or in addition, outliers can be excluded from the measurements.

In order to characterize the time scales of the measurement, Fig. 4c shows the measured signals from a flue gas duct. A light pulse dissociates part of the alkalihalide molecules comprised in the flue gases at the time of about $t_0$=5 $\mu$s, which shows as a sharp drop in the curves 462 and 464. At the time t=7 $\mu$s, the signals are returned back to the initial level. Therefore, the time scale for these reactions is of the order of 2 $\mu$s. Moreover, the signal level seems to drop in approximately 250 ns. However, the signal level shown in Fig. 4c is filtered using a moving average. Therefore, the signal level seems to drop significantly slower than it actually does. The signal level drops in a time scale of the order of the duration of the light pulse 710. The second intensity $I_k$ of the attenuated light beam 175 may be measured from a local minimum of the intensity signal, or using a fitted function as discussed above.

The light beam 170 may also comprise light pulses. Thus, the light beam source 310 may be a pulse light source. When a pulse light source is used as the light beam source 310, the values at the photodetector 320 are detected when the attenuated light beam 175 illuminates the photodetector. Conversely, if light pulses are used as the light beam 170, the photodetector 320 detects periodically very small values corresponding to the times, when the attenuated light beam 175 is off. Relevant values for the method may be obtained when the attenuated light beam 175 illuminates the photodetector 320.

In the embodiment of Fig. 7, the light pulse source 700 may be e.g. a Xenon flash source. The light pulse 710 may be emitted to substantially all angles to the space 110 at the same time.

Having described the principle, it is apparent that the method further comprises:

- generating a light pulse 710, wherein the light pulse 710 comprises photons having a second wavelength $\lambda_2$,
- dissociating at least part of the alkalihalide molecules 510 on the first optical path 160 to alkali atoms 520 and halogen atoms 525, using the light pulse 710, wherein the light beam 170 is further attenuated to the attenuated light beam 175 by absorption to the alkali atoms on the first optical path 160,
- detecting a second value indicative of a second intensity, $I_k$, of the attenuated light beam 175, and
- determining, using the first value and the second value, the alkalihalide content in the flue gas.

The second value indicative of a second intensity, $I_k$, of the attenuated light beam 175 may be detected during the recovery period. Moreover, the second intensity, $I_k$, of the attenuated light beam 175 has been further attenuated by absorption of the light beam 170 to the dissociation induced alkali atoms 520 on the first optical path 160.

The second value indicative of a second intensity, $I_k$, of the attenuated light beam 175 may be e.g. the signal level of the photodetector 320 corresponding to the second intensity, $I_k$. The values indicative of the intensities may naturally be the value of the intensities. A fitted function may be used such that a value of the signal in the increasing part of the measured data is indicative of the local intensity minimum or the second intensity, $I_k$. The photodetector may also be invertive, e.g. the signal may decrease even if the intensity increases. The increasing part of the measured data refers to increasing intensity.

Fig. 4c shows the first intensity $I_{k0}$ of the attenuated light beam 175 and the second intensity $I_k$ of the attenuated light beam 175 for the signal 462. The first intensity $I_{k0}$ refers to the intensity before dissociating at least part of the alkalihalide molecules 510 on the first optical path 160. The value indicative of the second intensity $I_k$ of the attenuated light beam 175 is determined using the function 435 (line), and the value for $I_k$ is determined as the value of the function at the time $t_0$ of the light pulse. The second intensity $I_k$ of the attenuated light beam 175 could be measured from a local minimum of the signal immediately or essentially immediately after dissociating the alkalihalide molecules.

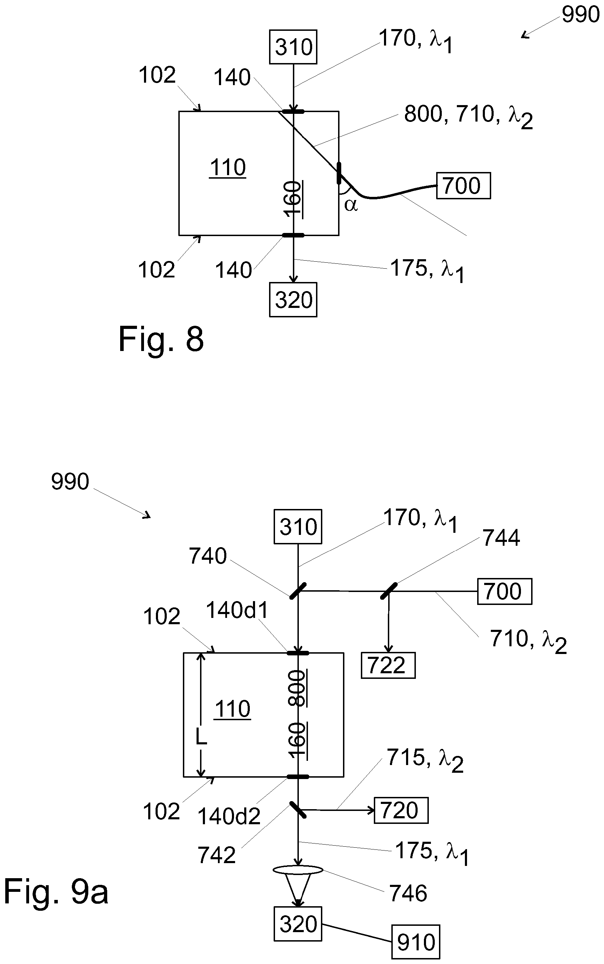

Figure 8 shows another embodiment. In Fig. 8, the light pulse 710 is guided to a second optical path 800. The second optical path 800 crosses the first optical path 160. Moreover, the angle of the light pulse, $\alpha$, is adjustable. Therefore, the angle $\alpha$ defines the positions, at which the second optical path 800 crosses the first optical path 160. Thus, the method becomes position sensitive. In the embodiment, the alkalihalide molecules are dissociated on the second optical path 800. However, the dissociation affects the intensity of the attenuated light beam 175 only in the case that the alkalihalide molecules are dissociated also on the first optical path 160. Therefore, the alkali atom content becomes measured from the volume, where the second optical path 800 crosses the first optical path 160. As the angle $\alpha$ is adjustable, alkali atom content in all positions at the first optical path 160 may be measured. It is also possible to make position sensitive measurements using essentially perpendicular optical paths 160 and 800 and using a movable light pulse source.

Figure 9a shows a preferred embodiment of the invention. The device 990 of Fig. 9a comprises:

- a light beam source 310, arranged to emit a monochromatic and coherent light beam 170 having the first wavelength $\lambda_1$,
- a light pulse source 700, arranged to emit a monochromatic and coherent light beam 710 having the second wavelength $\lambda_2$,
- a first optical element 740, arranged to guide

  ○ the light beam 170 to a first optical path 160 and
  ○ the light pulse 710 to a second optical path 800 such that the second optical path 800 overlaps the first optical path 160,

- a second optical element 742, arranged to pass the attenuated light beam 175, i.e. light having the wavelength $\lambda_1$, and to deflect, reflect, or absorb the attenuated light pulse 715, i.e. light having the wavelength $\lambda_2$,
- a third optical element 744, arranged to reflect a first part of light having the wavelength $\lambda_2$ and to pass a second part of light having the wavelength $\lambda_2$,
- a first photodetector 320, arranged to detect the intensity of the attenuated light beam 175 having the wavelength $\lambda_1$,
- a lens 746, arranged to converge the attenuated light beam 175 to the first photodetector 320,
- a second photodetector 720, arranged to detect the intensity of attenuated light pulse 715, the attenuated light pulse having the wavelength $\lambda_2$, and
- a third photodetector 722, arranged to detect the intensity of light having the wavelength $\lambda_2$
- a data processing unit 910, wherein the data processing unit is arranged to calculate the alkalihalide content using a first value, the first value being indicative of a first intensity $I_{k0}$ of the attenuated light beam 175 on the photodetector 320, and a second value, the second value being indicative of a second intensity $I_k$ of the attenuated light beam 175 on the photodetector 320.

Fig. 9a also shows

- a space 110, arranged to contain the flue gas or flue gas sample,
- a first window 140d1, arranged to pass the light pulse 710 and the light beam 170 to the space 110 and to retain the flue gas or flue gas sample within the space 110, and
- a second window 140d2, arranged to pass the light pulse 710 and the light beam 170 from the space 110 and to retain the flue gas or flue gas sample within the space 110.

It is noted, that the intensity or the energy of the attenuated light pulse 715 is not necessarily measured, and therefore, the second photodetector 720 may be omitted. The third optical element 744 and the third photodetector 722 are arranged to measure the intensity or energy of the light pulse 710. The intensity or the energy of the light pulse 710 is not necessarily measured, and therefore, the third photodetector 722 and the third optical element 744 may be omitted. In addition, the device may comprise other optical elements such as lenses to converge the first part of the light pulse 710 to the third photodetector, or the attenuated light pulse 715 to the second photodetector. Other examples of such optical elements of optical waveguides, e.g. optical fibres, arranged to guide light and/or to affect an angle or a position of a light beam or light pulse.

As described above, the second optical path 800 overlaps the first optical path 160. Referring to Fig. 9a, the second optical path 800 overlaps the first optical path 160 for example when the optical paths are essentially parallel and co-centric. The optical paths may also be essentially parallel, but the central axes may be shifted with respect to each other. The term essentially parallel may be interpreted such that the first optical path 160 is essentially parallel to the second optical path 800 if

- the optical paths are parallel or
- the optical paths are so aligned, that the light beam 170 and the light pulse 710 at least partially overlap on all points between the optical inlet (e.g. the first window 140d1) and the optical outlet (e.g. the second window 140d2), or
- the optical paths are so aligned, that the light beam 170 and the light pulse 710 at least partially overlap on all points between the first optical element 740 and one of: the second optical element 742, the lens 746, and the first photodetector 320 (whichever is comprised by the device).

As described above, the light beam 170 may have a first radius $r_1$ from 0,5 mm to 50 mm. The light pulse 710 may also be coherent and have a cross-section. The cross section of the light pulse has a first dimension $d_1$ and a second dimension $d_2$, wherein the second dimension is perpendicular to the first dimension. The orientations for the dimensions is selected such that are selected such that the first dimension is the smaller of the first and the second dimension, i.e. $d_1=\min(d_1,d_2)$. The dimension may be equal. Theoretically there is no limit for the dimensions of the light pulse 710. However, as will be seen, the dimensions of the light pulse affect the sensitivity of the method. The method is more sensitive if a narrow light pulse 710 is used. Moreover, a very wide light pulse may be hard to generate. The first dimension of the light pulse may be e.g. in the range from 1 mm to 100 mm. The first dimension of the light pulse is preferably from 20 mm to 50 mm. More preferably, the cross section of the light pulse 710 is greater than the cross section of the light beam 170, such that the light pulse 710, when present, surrounds the light beam 170. The light pulse 710 may have a circular cross section, whereby the light pulse may have a second radius $r_2$ from 0,5 mm to 50 mm. The first and the second radii may also be equal or approximately equal. Preferably the radius of the light pulse, $r_2$, is 1 mm - 2 mm greater than the radius of the light beam, $r_1$.

The central axis of the first optical path 160 may be shifted with respect to the central axis of the second optical path 800 by a distance d. The distance should be smaller than the sum of the radii, i.e. $d<r_1+r_2$. Preferable the distance should be smaller than the smaller of the radii, i.e. $d<\min(r_1,r_2)$. In case the central axes of the optical paths are shifted with respect to each other, it may be possible to omit the second optical element 742 from the device. In this case it may be possible to locate the first photodetector 320 such that the attenuated light pulse 715 bypasses the first photodetector 320, and the attenuated light beam 175 hits the first photodetector 320. The optical paths 160, 800 may be essentially co-centric, if they are essentially parallel. The optical paths 160, 800 are considered essentially co-centric, if the distance between the optical paths 160, 800 is less 25 % of the smaller of the following: smaller dimension of the light beam 170 and smaller dimension of light pulse 710. E.g. the optical paths 160, 800 are considered essentially co-centric, if the distance between the optical paths 160, 800 is less than $0.25\times\min(2r_1,2r_2)$. The distance between the optical paths 160, 800 may be considered the minimum distance between the optical paths 160, 800. Co-centric optical paths are essentially co-centric.

The light pulse source 700 may be e.g. one of

- a pulse laser,
- a Xenon flash source,

- a continuous laser with a chopper,
- a continuous laser operated in pulse mode,
- a light emitting diode (LED) operated in pulse mode,
- a continuous LED with a chopper,
- a continuous light source operated in pulse mode, and
- a continuous light source with a chopper.

Some light sources may be operated in a pulse mode using pulse mode drive current. A chopper may comprise e.g. a rotating opaque disk, the disk comprising a slit arranged to pass light through the slit. When light is directed towards the disk, a light pulse is generated when the light passes the slit of the otherwise opaque disk.

The duration of the light pulse is preferably less than the recovery time of the alkali atoms, which is of the order of 2 $\mu$s for potassium and for flue gases. In some other environments, or for some other alkali atoms, the recovery time may be longer. The duration of the light pulse may be selected according to the light source. E.g. a pulse laser has typically a pulse duration from 1 fs ($10^{-15}$) to 100 ns ($10^{-9}$) . Lasers emitting very short pulses are typically mode locked, and may emit series of pulses instead of single light pulses. A Xenon flash may have a pulse duration of the order of 1 $\mu$s. The time between subsequent pulses, i.e. the time between the end of a pulse and the beginning of a subsequent pulse, is preferably significantly more than the recovery time of the alkali atoms, which is of the order of 2 $\mu$s for potassium in flue gases. The time between subsequent pulses is not necessarily more than the recovery time of the alkali atoms. The time between subsequent pulses may be e.g. more than 5 $\mu$s when measuring the potassium chloride content from flue gases. In an embodiment, the time between subsequent pulses was 1 s. For other alkali metals or for other environments, a longer time between pulses may be appropriate.

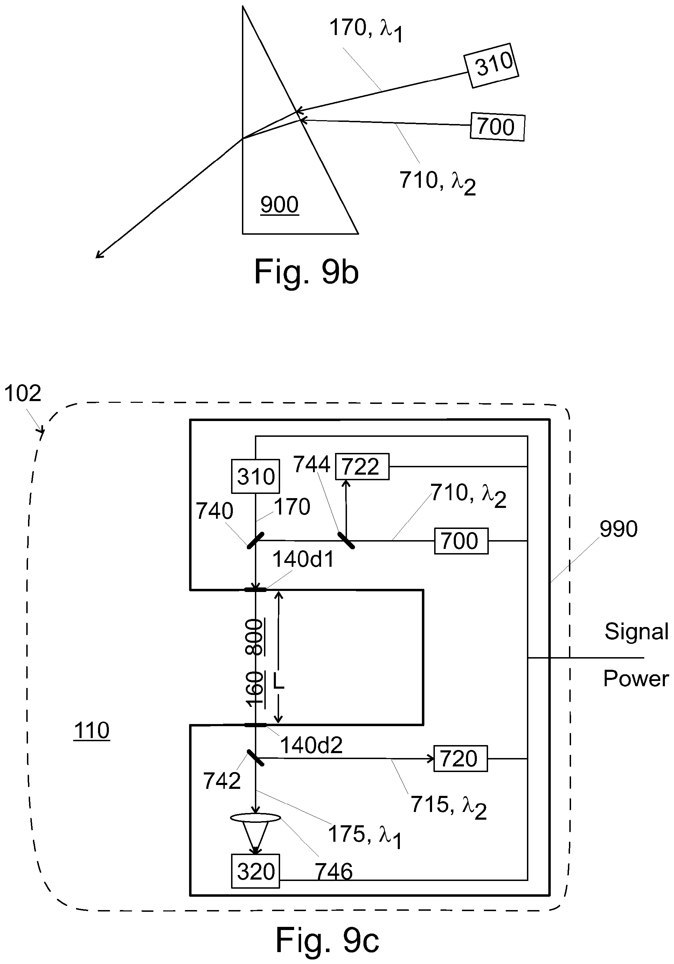

The first optical element 740 is arranged to guide the light beam 170 to a first optical path 160 and the light pulse 710 to a second optical path 800 such that the second optical path 800 overlaps the first optical path 160. The first optical element 740 may be e.g. a wavelength-selective reflector that operates as a mirror for the wavelength $\lambda_2$ and as a transparent object for the wavelength $\lambda_1$, as shown in the Fig. 9a. In a different configuration, the first optical element 740 could reflect light having a long wavelength and pass light having a short wavelength. The first optical element may be selected from a variety of known optical elements. For example, a prism 900 may be used, as shown in Fig. 9b. A grating may also operate as a wavelength-selective reflector. A fiber coupler may also operate as the first optical element.

The second optical element 742 is arranged to pass the attenuated light 175 beam and to deflect, reflect, or absorb the attenuated light pulse 715. The second optical element 742 is arranged to pass light having the wavelength $\lambda_1$ to the photodetector 320. The second optical element 742 is also arranged to prevent the attenuated light pulse 715 from entering the photodetector 320. The second optical element 742 may be any one of those that can be used as the first optical element 740. The second optical element may also be a filter arranged to absorb light having the wavelength $\lambda_2$. In this case the device does not comprise the second photodetector 720.

The third optical element 744 is arranged to reflect a known (small) first part of light that hits the surface of the third optical element 744, and to pass a second part of the light. Thus, by measuring the intensity (or energy) of the reflected first part of the light pulse 710 using the third photodetector 722, the intensity (or energy) of the second part of the light pulse 710 may be calculated.

Referring to Figs. 4b and 9a, a first intensity of the $I_{k0}$ of the attenuated light beam 175 is measured with the photodetector 320 before a light pulse 710 is emitted. In addition, after dissociating at least part of the alkalihalide molecules 525 on the first optical path 160 with the light pulse 710, a second intensity $I_k$ of the attenuated light beam 175 is detected.

As the light pulse 710 or light beam 170 are not necessarily monochromatic, and all the components shown in Fig. 9a are not necessary to carry out the method, a device 990 for measuring the alkalihalide content of flue gas comprises:

- a light beam source 310, arranged to emit a light beam 170 comprising photons having a first wavelength $\lambda_1$,
- a photodetector 320, arranged to detect the intensity of an attenuated light beam 175, wherein

  ◦ a first optical path 160 is located between the photodetector 320 and the light beam source 310,
  ◦ the first optical path 160 runs through a space 110 arranged to contain the flue gas, and
  ◦ the light beam 170 is arranged to be attenuated to the attenuated light beam 175 within the space 110, and the device further comprises

- a light pulse source 700, wherein
  ◦ the light pulse source 700 is arranged to generate a light pulse 710 comprising photons having a second wavelength $\lambda_2$, at least part of the photons dissociating at least part of the alkalihalide molecules 510 on the first optical path 160 to alkali atoms 520 and halogen atoms 525, and

- the photodetector 320 is arranged to detect, during a recovery period, a second value indicative of a second intensity $I_k$ of the attenuated light beam 175, wherein the light beam 170 is further attenuated to the attenuated light beam (175) by absorption to the alkali atoms on the first optical path 160.

The alkalihalide content may be calculated in a data processing 910 unit that receives a first value, the first value being indicative of a first intensity $I_{k0}$ of the attenuated light beam 175 on the photodetector 320 and a second value, the second value being indicative of a second intensity $I_k$ of the attenuated light beam 175 on the photodetector 320. The data processing unit 910 may be comprised in the device 990 for measuring the alkalihalide content. In case the data processing unit is located far apart from the photodetector 320, the device 990 may be relatively large is size. Thus, the device 990 further comprises

- a data processing unit 910, wherein the data processing unit is arranged to calculate the alkalihalide content using a first value, the first value being indicative of a first intensity ($I_{k0}$) of the attenuated light beam (175) on the photodetector (320), and a second value, the second value being indicative of a second intensity ($I_k$) of the attenuated light beam (175) on the photodetector (320).

A boiler 100 may comprise the device 990 for measuring the alkalihalide content of the flue gas. The boiler may further comprise

- boiler walls 102 limiting the interior of the boiler 100, wherein

  ○ the interior is arranged to comprise the flue gases, and
  ○ the interior comprises the space 110,

- an optical inlet 130 such as a hole 132 or a window 140 a boiler wall, wherein
  ○ the first optical path 160 runs from the optical inlet 130 to one of a

    ▪ an optical outlet 135 such as a second hole 132 or a second window 140 and
    ▪ a reflector; the reflector being arranged to guide the light beam 170 to the optical inlet 130.

The boiler may further comprise a heat exchanger. The heat exchanger 150 may be located downstream of first optical path 160 in the direction 123 of flue gas flow, as depicted in Fig. 3.

Referring to Fig. 9c, the device 990 for measuring the alkalihalide content of flue gas may be located in the space 110, e.g. in the interior of a boiler. Fig. 9c shows the device 990 in the space 110. The space may be surrounded by walls 102 arranged to retain the flue gas within the space 110. However, the device 990 may also be operated in the exterior of a boiler. The flue gas to be measured may be conveyed to the optical paths 160 and 800. Fig. 9c also shows wiring for the operating power ("Power"), especially for the light beam source 310 and the light pulse source 700. Fig. 9c also shows wiring for the signal ("Signal"), especially for the photodetectors 320, 720, and 722. The device may send the signals of the photodetectors to an external part, wherein the external part is arranged to calculate the alkalihalide content using the signals, as will be discussed. The device 990 may comprise a data processing unit (not shown), arranged to calculate the alkalihalide content using the signals of the photodetectors. More specifically, the data processing unit may be arranged to calculate the alkalihalide content using a first value, the first value being indicative of a first intensity $I_{k0}$ on the photodetector 320, and a second value, the second value being indicative of a second intensity $I_k$ on the photodetector 320. The control unit or another control unit comprised by the device 990 may be arranged to control at least one of the drive current of the light beam source 310 and the drive current of the light pulse source 700. In addition, the device 990 may comprise a reflector such that the light beam 170 and the light pulse 710 travel back and forth the optical paths 160, 800, as discussed earlier in the context of Fig. 2c. If flue gases from the space 100 are allowed to enter the device 990, the device may not need the windows 140d1 and 140d2 to retain flue gases in the exterior of the device.

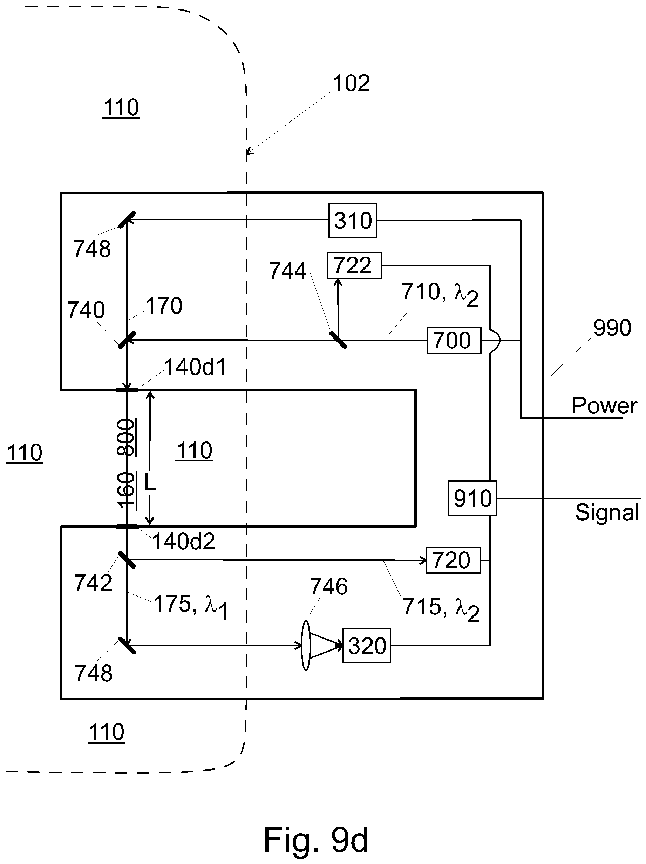

Referring to Fig. 9d, only a part of the device 990 for measuring the alkalihalide content of flue gas may be located in the space 110, e.g. in the interior of a boiler. Fig. 9d shows the device 990 arranged partly in the space 110. The device of Fig. 9d comprises the elements of the device of Fig. 9c. Fig. 9d further comprises two reflectors 148, and the data processing unit 910.

The devices 990 of Figs. 9c and 9d are detachable from the boiler (the boiler being shown only by its wall 102 in these figures). The devices 990 of Figs. 9c and 9d are also movable, and may be used in connection with another boiler.

One advantage of the method is that the first optical path 160 (and possibly also the second optical path 800) may extend through the boiler, from one boiler wall 102a1 to an opposite boiler wall 102a2, as depicted in Fig. 2a. Therefore, the alkalihalide content can be measured *in situ* from the first optical path 160 within the boiler. Thus, the problem of collecting a representative sample of the flue gas for the measurements can be sidestepped simply by omitting sampling. Furthermore, the bypass 128 (Fig. 1b) is not necessarily needed, which reduces overall costs.

From the attenuated intensities $I_{k0}$ and $I_k$, the calculation of the alkalihalide content may be done as follows: The intensity of the light beam 170 is decreased in the space 110 by at least one of

> (i) absorption due to alkali atoms produced in the dissociation of alkalihalide molecules using the light pulse 710, i.e. dissociation induced alkali atoms,
> (ii) other processes such as scattering or absorption by other compounds or particles, and
> (iii) absorption due to other alkali atoms, e.g. alkali atoms produced by other dissociation processes of alkalihalides, e.g. thermal dissociation.

Therefore, for the measured intensity before dissociation of alkalihalide molecules, one may write $I_{k0}=\varphi I_0$, wherein $I_{k0}$ is the observed intensity of the attenuated light beam 175 before dissociation, $I_0$ is the intensity of the light beam 170 before entering the space 110, and $\varphi$ is an attenuation factor. The attenuation factor $\varphi$ takes into account attenuation of light beam due to the processes (ii) and (iii) above. The Beer-Lambert law may be applied to describe absorption by dissociated alkali atoms. Therefore, for the intensity after the dissociation, one may write:

$$(1) \quad I_k = \varphi \exp(-\xi_M \frac{N}{V} \sigma_M L) I_0 = I_{k0} \exp(-\xi_M \frac{N}{V} \sigma_M L)$$

wherein $I_k$ is the intensity of the attenuated light beam 175 after the dissociation of the alkalihalide molecules by the light pulse 710, $I_{k0}$ is the intensity before the dissociation, $\xi_M$ is the alkali atom content (as measured in proportion, e.g. in ppm or ppb; subscript M stands for metal), N is the total number of atoms and molecules in a volume V, and $\sigma_M$ is the absorption cross section of the alkali atom for the light beam having wavelength $\lambda_1$. The volume V refers to the volume on the first optical path 160 where dissociation takes place, and N refers to the total number of atoms and molecules within this volume. L is the distance, wherein absorption of light having the wavelength $\lambda_1$ to alkali atoms takes place. E.g. if the light beam 170 and the light pulse have the same cross section, are co-centric and are parallel, the volume V is essentially the cross-sectional area of the light or pulse multiplied by the distance L. For the given wavelength and potassium, the potassium being generated by dissociating potassium chloride, the absorption cross section $\sigma_M$ is $1.47 \times 10^{-12}$ cm$^2$, as depicted in Fig. 6 (the maximum value; the wavelength $\lambda_1$ corresponds to this value).

The alkali atom is present on the first optical path 160 due to the dissociation process. Each dissociation process uses the energy of a photon quantum of the light pulse 710. The energy of a photon of the monochromatic light pulse 710 is $hc/\lambda_2$. Thus, the number of dissociated alkali atoms may be written as:

$$(2) \quad N_M = \xi_M N = \frac{E_{p0} - E_p}{hc / \lambda_2}$$

wherein $N_M$ is the number of alkali atoms, $E_{p0}$ is the energy of the light pulse 710 entering the space 110 (or the energy of the second part of the light pulse 710, if the third optical element 744 is used), and $E_p$ is the energy of the attenuated light pulse 715 leaving the space 110. It is assumed, that the decrement of the energy pulse $E_{p0}-E_p$ is totally used to dissociate alkalihalide molecules. By applying the Beer-Lambert law for the light pulse 710:

$$(3) \quad E_p = E_{p0} \exp(-\xi_{MH} \frac{N}{V} \sigma_{MH} L)$$

wherein $\xi_{MH}$ is the alkalihalide content of interest (as measured in proportion, e.g. in ppm or ppb) and $\sigma_{MH}$ is the absorption cross section for the alkalihalide and the light pulse having wavelength $\lambda_2$. The absorption cross section $\sigma_{MH}$ for potassium chloride for the given wavelength $\lambda_2$ is about $10^{-21}$ m$^2$. The absorption cross sections $\sigma_{MH}$ and $\sigma_M$ are not heavily dependent on temperature, at least for a temperature below 2000 °C. On the other hand, the alkalihalide should be in gaseous form for the applicability of the method. It is known in the art that e.g. potassium chloride condenses on heat exchanger surfaces at a surface temperature below 600 °C. Therefore, even if the method is applicable in a low temperature, the potassium chloride content in the cold flue gas may be very low. Thus, the method may be applicable e.g. for flue gases having a temperature up to 2000 °C, and the method is preferably used for flue gases having a temperature in the range from 600 °C to 2000 °C. In a higher temperature the dependence of the parameters on temperature should be taken into account.

By using Eqns. (2) and (3), the number of dissociated alkalihalide molecules can be calculated. Eq. (3) describes, how much of the energy of the light pulse is used to dissociate the molecules, and Eq. (2) describes, how this energy is related to the number of dissociated molecules. The number of dissociated atoms may be relatively low. The number depends e.g. on the energy of the light pulse and also on the content of alkalihalide molecules. An example of a situation is one, where a light pulse has the energy $E_{p0}$ of 10 $\mu$J and the diameter of 10 mm, and the light pulse is used to dissociate the alkalichloride molecules, wherein the alkalichloride content is 100 ppm, and the distance L is 5 m. In this case only one molecule out of 8400 alkalichloride molecules becomes dissociated by the light pulse. If the alkalichloride content was less, more molecules would be dissociated. For example, for alkalichloride content of less than 6 ppm, one molecule out of about 6000 alkalichloride molecules is dissociated by the light pulse and conditions described above.

The ratio between the number of molecules or atoms and the volume may be written in terms of other constants using the ideal gas law: pV=NkT, wherein p is the pressure, T is the temperature and k is the gas constant.

Using these equations, one may derive an equation for the alkalihalide content:

$$(4)\ \ \xi_{MH} = -\ln\left[1 + \ln\left(1 - \frac{I_{k0} - I_k}{I_{k0}}\right)\frac{hc/\lambda_2}{E_{p0}}\frac{A_p}{\sigma_M}\right]\frac{kT}{p}\frac{1}{\sigma_{MH}L}$$

wherein $A_p$ is the cross sectional area of the light pulse 710. Thus, for a coherent light pulse, $A_pL$ is the volume V, wherein the alkalihalide molecules are dissociated. An example of the distance L, wherein absorption of light having the wavelength $\lambda_1$ to alkali atoms takes place, is depicted in Figs. 9a and 9c. In case the first optical path 160 and the second optical path 800 are not parallel (Figs. 7 and 8), the distance L may be much shorter. In case the paths 160 and 800 are perpendicular, the distance L is of the order of the diameter of the optical pulse, i.e. $2r_2$. For the calculation of the alkalihalide content, the optical paths are preferably essentially parallel and essentially co-centric.

From Eq. (4) one may see that the sensitivity of the method depends e.g. on the energy of the light pulse $E_{p0}$, the area of the light pulse $A_p$, and the distance L. Increasing the pulse energy, increasing the distance L or decreasing the pulse area increases the sensitivity. In principle there is no limit for the distance L. However, in some embodiments, the distance L may range from 1 cm to 50 m. Preferably L is of the order of the width of a flue channel of a boiler, as shown in Fig. 3.

In the above equations (2) and (3), it was assumed that all the photons of the light pulse 710 that are absorbed in the space 110 dissociate an alkalihalide molecule. In a combustion environment, scattering and absorption to other molecules may also occur. The accuracy of the method may be improved by measuring the pulse energy $E_{p0}$ before dissociation with the third photodetector 722 and the pulse energy $E_p$ after dissociation with the second photodetector 720. The difference between these energies may then be compared with the theoretical estimate of Eq. (3). In case deviations from Eq. (3) are large, both energies may be used to deduce a value for the content $\xi_{MH}$.

The pulse energy, $E_{p0}$, may have a value from 1 nJ to 10 J, preferably from 0.5 $\mu$J to 50 $\mu$J, and in some embodiments, pulse energies of 0.8 $\mu$J, 1.6 $\mu$J, 10 $\mu$J, and 20 $\mu$J have been used. A higher pulse energy may be used to detect lower alkalihalide contents. For example the pulse energy 10 $\mu$J was used to detect potassium chloride contents in the range from 30 ppb ($10^{-9}$) to 3 ppm ($10^{-6}$), while the pulse energy 0.8 $\mu$J was used to detect potassium chloride concentrations in the range from 10 ppm to 30 ppm. In these measurements, a distance of L=60 cm was used. Moreover, a coherent and monochromatic light beam 170 having a circular cross section and the diameter of 3 mm was used. It is noted, that the intensities are relatively high. E.g. a 10 $\mu$J pulse having the duration of 10 ns means a power of 1 kW. If the pulse has a circular cross section with the radius of 1 cm, the intensity of the light pulse 710 is approximately 3 MW/m$^2$.

The device 990 may comprise a single light source 730. The light source 730 is depicted in Figs. 10a and 10b. Fig. 10a shows an integrated light source 730 comprising the light beam source 310 and the light pulse source 700. The integrated light source 730 is arranged to emit a light beam 170 and a light pulse 710 such that the light beam is essentially parallel to the light pulse. At least one of the light beam and the light pulse may be guided using reflectors 148 inside the integrated light source. Fig. 10b shows another integrated light source 730 comprising the light beam source 310 and the light pulse source 700. The integrated light source 730 is arranged to emit a light beam 170 and a light pulse 710 such that the light beam is essentially parallel to the light pulse. At least one of the light beam 170 and the light pulse 710 may be guided using a waveguide 732, e.g. an optical fiber. In the figure 10b only the light beam 170 is guided using the waveguide 732. The light beam and the light pulse may be made wider using optical elements, whereby the light pulse and the light beam are arranged to overlap more than depicted in the figure. Moreover, the light pulse and the light beam may widen in a boiler, whereby such an widening optical element is not necessarily needed.

Fig. 4b shows two measured signals 462 and 464. The values indicative of the intensities for these measurements, given as pairs ($I_{k0},I_k$), are (0.1,0.06) and (0.05,0.03), respectively. It is noted, that these values are given in units of voltage. The values are indicative of intensities. In case the photodetector 320 has a linear response, the ratio for the intensities in Eq. (4) can equally well be considered the ratio of indicative values, i.e. voltages. Both these pairs correspond to the value 0.4 of $(I_{k0}-I_k)/t_{k0}$. Moreover, using Eq. (4), the corresponding content $\xi_{MH}$ of alkalihalide could be calculated to be from 2,5 ppm to 3 ppm in an experiment. Depending on the other parameters of the equation these values could correspond to a different alkalichloride content.

The method is not limited to the described embodiments, but can be used within the claims.

## Claims

1. A method for measuring alkalihalide content of flue gas, the method comprising

   - generating a light beam (170), wherein the light beam (170) comprises photons having a first wavelength ($\lambda_1$),
   - guiding the light beam (170) to a first optical path (160), wherein
   - the first optical path (160) runs through a space (110) containing the flue gas, whereby the light beam (170) is attenuated to an attenuated light beam (175) and
   - detecting a first value indicative of a first intensity ($I_{k0}$) of the attenuated light beam (175),

   **characterized in**

   - generating a light pulse (710), wherein the light pulse (710) comprises photons having a second wavelength ($\lambda_2$),
   - dissociating at least part of the alkalihalide molecules (510) on the first optical path (160) to alkali atoms (520) and halogen atoms (525), using the light pulse (710), wherein the light beam (170) is further attenuated to an attenuated light beam (175) by absorption to the alkali atoms (520) on the first optical path (160),
   - detecting a second value indicative of a second intensity ($I_k$) of the attenuated light beam (175), and
   - determining, using the first value and the second value, the alkalihalide content of the flue gas.

2. The method of claim 1, **characterized in that**

   - the first wavelength ($\lambda_1$) corresponds to an absorption profile of the alkali atom (520), and
   - the second wavelength ($\lambda_2$) is less than or equal to 420 nm.

3. The method of claim 1 or 2, **characterized by**

   - generating the light beam (170) using a light beam source (310) comprising a laser, and
   - generating the light pulse (710) using a light pulse source (700) comprising a laser.

4. The method of any of the claims 1 to 3, **characterized in that**

   - the light beam (170) has a first cross section,
   - the light pulse (710) has a second cross section, and
   - the second cross section is greater than the first cross section.

5. The method of any of the claims 1 to 4, **characterized in that** the method comprises

   - guiding at least part of the light pulse (710) to a second optical path (800) such that
   - the first optical path (160) and the second optical path (800) are parallel, or
   - the first optical path (160) and the second optical path (800) are so aligned, that the light beam (170) and the light pulse (710) at least partially overlap on all points between an optical inlet (130) and an optical outlet (135), or
   - the first optical path (160) and the second optical path (800) are so aligned, that the light beam (170) and the light pulse (710) at least partially overlap on all points between a first optical element (740) and one of: a second optical element (742), a lens (746), and a first photodetector (320).

6. The method of claim 5, **characterized in that** the

   - the light beam (170) has a cross section, and the cross section has a first dimension ($l_1$) and a second dimension ($l_2$), wherein the second dimension is perpendicular to the first dimension,
   - the cross section of the light pulse (710) has a first dimension ($d_1$) and a second dimension ($d_2$), wherein the second dimension is perpendicular to the first dimension, and
   - the distance (d) between central axis of the first optical path (160) and the central axis of the second optical path (800) is less than 25 % of the smaller of the following: smaller dimension of the light beam (170) and smaller dimension of light pulse (710).

7. The method of any of the claims 1 to 6, **characterized in that**

- the alkalihalide is potassium chloride (KCl), the method comprising
- generating the light beam (170) using a laser such that the first wavelength ($\lambda_1$) corresponds to an absorption peak of potassium,
- generating the light pulse (710) using a light pulse source (700) comprising a laser such that the second wavelength ($\lambda_2$) is less than or equal to 320 nm, preferably 266 nm,
- the method comprises guiding the light pulse (710) to a second optical path (800), wherein

[A]

    - the first optical path (160) and the second optical path (800) are parallel, or
    - the first optical path (160) and the second optical path (800) are so aligned, that the light beam (170) and the light pulse (710) at least partially overlap on all points between an optical inlet (130) and an optical outlet (135), or
    - the first optical path (160) and the second optical path (800) are so aligned, that the light beam (170) and the light pulse (710) at least partially overlap on all points between a first optical element (740) and one of: a second optical element (742), a lens (746), and a first photodetector (320)
    and

[B]

    - the light beam (170) has a cross section, and the cross section has a first dimension ($l_1$) and a second dimension ($l_2$), wherein the second dimension is perpendicular to the first dimension, and
    - the cross section of the light pulse (710) has a first dimension ($d_1$) and a second dimension ($d_2$), wherein the second dimension is perpendicular to the first dimension, and
    - the distance (d) between central axis of the first optical path (160) and the central axis of the second optical path (800) is less than 25 % of the smaller of the following: smaller dimension of the light beam (170) and smaller dimension of light pulse (710).

8. A device (990) for measuring alkalihalide content of flue gas, the device comprising

- a light beam source (310), arranged to emit a light beam (170) comprising photons having a first wavelength ($\lambda_1$) and
- a photodetector (320),wherein
- a first optical path (160) is arranged optically between the photodetector (320) and the light beam source (310),
- a space (110), through which the first optical path (160) is arranged to run, is arranged to contain flue gas absorbing the light beam (170),
- the light beam (170) is arranged to be attenuated to an attenuated light beam (175) by said absorption of the light beam (170), and
- the photodetector (320) is arranged to detect a first value indicative of a first intensity ($I_{k0}$) of the attenuated light beam (175),

**characterized in that** the device (990) comprises

- a light pulse source (700), wherein
- the light pulse source (700) is arranged to generate a light pulse (710) comprising photons having a second wavelength ($\lambda_2$), at least part of the photons dissociating at least part of the alkalihalide molecules (510) on the first optical path (160) to alkali atoms (520) and halogen atoms (525), wherein the light beam (170) is further attenuated to the attenuated light beam (175) by absorption to the alkali atoms on the first optical path 160, and
- the photodetector (320) is arranged to detect a second value indicative of a second intensity ($I_k$) of the attenuated light beam (175), and
- the device (990) comprises a data processing unit arranged to determine, using the first value and the second value, the alkalihalide content of the flue gas.

9. The device of claim 8, **characterized in that**

- the first wavelength ($\lambda_1$) corresponds to an absorption profile of the alkali atom (520), and
- the second wavelength ($\lambda_2$) is less than or equal to 420 nm.

10. The device of claim 8 or 9, **characterized in that** the device comprises

- an integrated light source (730), wherein the integrated light source (730) comprises the light beam source (310) and the light pulse source (700).

11. The device of any of the claims 8 to 10, **characterized in that**

- the light beam source (310) is a laser and
- the light pulse source (700) is a pulse laser.

12. The device of any of the claims 8 to 11, **characterized in that** the device comprises

- a first optical element (740), wherein the first optical element (740) is arranged
-- to guide the light beam (170) to the first optical path (160) and
-- to guide the light pulse (710) to a second optical path (800), wherein

[A]

- the first optical path (160) and the second optical path (800) are parallel, or
- the first optical path (160) and the second optical path (800) are so aligned, that the light beam (170) and the light pulse (710) at least partially overlap on all points between an optical inlet (130) and an optical outlet (135), or
- the first optical path (160) and the second optical path (800) are so aligned, that the light beam (170) and the light pulse (710) at least partially overlap on all points between a first optical element (740) and one of: a second optical element (742), a lens (746), and a first photodetector (320) and

[B]

- the light beam (170) has a cross section, and the cross section has a first dimension ($l_1$) and a second dimension ($l_2$), wherein the second dimension is perpendicular to the first dimension, and
- the cross section of the light pulse (710) has a first dimension ($d_1$) and a second dimension ($d_2$), wherein the second dimension is perpendicular to the first dimension, and
- the distance (d) between central axis of the first optical path (160) and the central axis of the second optical path (800) is less than 25 % of the smaller of the following: smaller dimension of the light beam (170) and smaller dimension of light pulse (710);

and the device (990) comprises
- a second optical element (742), wherein the second optical element (742) is arranged
-- to pass the attenuated light beam (175) to the photodetector (320) and
-- to deflect, reflect, or absorb the attenuated light pulse (715).

13. The device of any of the claims 8 to 12, **characterized in that**

- the light beam source (310) is a laser arranged to emit a light beam (170) having the first wavelength ($\lambda_1$) corresponding to an absorption peak of potassium,
- the light pulse source (700) comprises a pulse laser or a continuous laser arranged to emit a light pulse (710) having a second wavelength ($\lambda_2$) of less than or equal to 320 nm, preferably 266 nm, and
- the device comprises
- a first optical element (740), wherein the first optical element (740) is arranged

-- to guide the light beam (170) to the first optical path (160) and
-- to guide the light pulse (710) to a second optical path (800), wherein

[A]

- the first optical path (160) and the second optical path (800) are parallel, or
- the first optical path (160) and the second optical path (800) are so aligned, that the light beam (170) and the light pulse (710) at least partially overlap on all points between an optical inlet (130) and an optical outlet (135), or
- the first optical path (160) and the second optical path (800) are so aligned, that the light beam (170) and the light pulse (710) at least partially overlap on all points between a first optical element (740) and one of: a second optical element (742), a lens (746), and a first photodetector (320) and

[B]

- the light beam (170) has a cross section, and the cross section has a first dimension ($l_1$) and a second dimension ($l_2$), wherein the second dimension is perpendicular to the first dimension, and
- the cross section of the light pulse (710) has a first dimension ($d_1$) and a second dimension ($d_2$), wherein the second dimension is perpendicular to the first dimension, and
- the distance (d) between central axis of the first optical path (160) and the central axis of the second optical path (800) is less than 25 % of the smaller of the following: smaller dimension of the light beam (170) and smaller dimension of light pulse (710);

and the device comprises
- a second optical element (742), wherein the second optical element (742) is arranged

-- to pass the attenuated light beam (175) to the photodetector (320) and
-- to deflect, reflect, or absorb the attenuated light pulse (710).

**14.** A boiler (100) comprising

- boiler walls (102) limiting the interior of the boiler (100), wherein the interior is arranged to comprise flue gases, and
- an optical inlet (130, 132, 140) in a boiler wall (102),

**characterized in that**

- the boiler comprises the device of any of claims 8 to 13,
- the interior of the boiler comprises the space (110), and
- the first optical path (160) runs from the optical inlet (130, 132, 140) to one of an optical outlet (135, 132, 140) and a reflector (145); the reflector (145) being arranged to reflect or scatter at least part of the light beam (170) to the optical inlet (130, 132, 140).

**15.** The boiler (100) of claim 14, the boiler (100) comprising

- a heat exchanger (150),

**characterized in that**

- the heat exchanger (150) is located downstream of the first optical path (160) in the direction (123) of flue gas flow.

**Patentansprüche**

**1.** Verfahren zum Messen des Alkalihalogenid-Gehalts von Rauchgas, wobei das Verfahren Folgendes umfasst

- Erzeugen eines Lichtstrahls (170), wobei der Lichtstrahl (170) Photonen mit einer ersten Wellenlänge ($\lambda_1$) umfasst,
- Lenken des Lichtstrahls (170) auf einen ersten optischen Weg (160), wobei
- der erste optische Weg (160) durch einen Raum (110) verläuft, welcher das Rauchgas enthält, wobei der Lichtstrahl (170) zu einem abgeschwächten Lichtstrahl (175) abgeschwächt wird, und
- ein erster Wert detektiert wird, der eine erste Intensität ($I_{k0}$) des abgeschwächten Lichtstrahls (175) angibt,

**dadurch gekennzeichnet,**

- **dass** ein Lichtimpuls (710) erzeugt wird, wobei der Lichtimpuls (710) Photonen mit einer zweiten Wellenlänge ($\lambda_2$) umfasst,
- **dass** mindestens ein Teil der Alkalihalogenid-Moleküle (510), die sich auf dem ersten optischen Weg (160) befinden, durch die Anwendung des Lichtimpulses (710) eine Dissoziation zu Alkaliatomen (520) und Halogenatomen (525) erfährt, wobei der Lichtstrahl (170) durch Absorption an den Alkaliatomen (520), die sich auf dem ersten optischen Weg (160) befinden, eine weitere Abschwächung zu einem abgeschwächten Lichtstrahl (175) erfährt,
- **dass** ein zweiter Wert detektiert wird, der eine zweite Intensität ($I_k$) des abgeschwächten Lichtstrahls (175) angibt, und
- **dass** unter Verwendung des ersten Wertes und des zweiten Wertes der Alkalihalogenidgehalt des Rauchgases bestimmt wird.

2. Verfahren nach Anspruch 1, **dadurch gekennzeichnet, dass**:

- die erste Wellenlänge ($\lambda_1$) einem Absorptionsprofil des Alkaliatoms (520) entspricht, und
- die zweite Wellenlänge ($\lambda_2$) kleiner oder gleich 420 nm ist.

3. Verfahren nach Anspruch 1 oder 2, **dadurch gekennzeichnet, dass**

- der Lichtstrahl (170) unter Verwendung einer Lichtstrahlenquellen (310) erzeugt wird, welche einen Laser umfasst, und
- der Lichtimpuls (710) unter Verwendung einer Lichtimpulsquelle (700) erzeugt wird, die einen Laser umfasst.

4. Verfahren nach beliebigen der Ansprüche 1 bis 3, **dadurch gekennzeichnet, dass**

- der Lichtstrahl (170) einen ersten Querschnitt hat,
- der Lichtimpuls (710) einen zweiten Querschnitt hat, und
- der zweite Querschnitt größer als der erste Querschnitt ist.

5. Verfahren nach beliebigen der Ansprüche 1 bis 4, **dadurch gekennzeichnet, dass** das Verfahren Folgendes umfasst

- Lenken mindestens eines Teils des Lichtimpulses (710) auf einen zweiten optischen Weg (800), derart, dass
- der erste optische Weg (160) und der zweite optische Weg (800) parallel sind, oder
- der erste optische Weg (160) und der zweite optische Weg (800) derart aufeinander ausgerichtet sind, dass der Lichtstrahl (170) und der Lichtimpuls (710) an sämtlichen Punkten zwischen einer optischen Eintrittsstelle (130) und einer optischen Austrittsstelle (135) mindestens teilweise überlappen, oder
- der erste optische Weg (160) und der zweite optische Weg (800) derart aufeinander ausgerichtet sind, dass der Lichtstrahl (170) und der Lichtimpuls (710) eine mindestens teilweise Überlappung an sämtlichen Punkten zwischen einem ersten optischen Element (740) einem der folgenden zeigen: einem zweiten optischen Element (742), einer Linse (746) und einem ersten Photodetektor (320).

6. Verfahren nach Anspruch 5, **dadurch gekennzeichnet, dass**:

- der Lichtstrahl (170) einen Querschnitt hat, wobei der Querschnitt eine erste Abmessung ($I_1$) und eine zweite Abmessung ($I_2$) hat, wobei die zweite Abmessung rechtwinklig zur ersten Abmessung ist,
- der Querschnitt des Lichtimpulses (710) eine erste Abmessung ($d_1$) und eine zweite Abmessung ($d_2$) hat, wobei die zweite Abmessung rechtwinklig zur ersten Abmessung ist, und
- der Abstand ($d$) zwischen der Mittelachse des ersten optischen Weges (160) und der Mittelachse des zweiten optischen Weges (800) weniger als 25 % des kleineren der folgenden ausmacht: der kleineren Abmessung des Lichtstrahls (170) und der kleineren Abmessung des Lichtimpulses (710).

7. Verfahren nach beliebigen der Ansprüche 1 bis 6, **dadurch gekennzeichnet, dass**

- es sich bei dem Alkalihalogenid um Kaliumchlorid (KCl) handelt, wobei das Verfahren Folgendes umfasst

- Erzeugen des Lichtstrahls (170) unter Verwendung einer Lasers, derart, dass die erste Wellenlänge ($\lambda_1$) einem Absorptionsmaximum von Kalium entspricht,

- Erzeugen des Lichtimpulses (710) unter Verwendung einer Lichtimpulsquelle (700), die einen Laser umfasst, derart, dass die zweite Wellenlänge ($\lambda_2$) kleiner oder gleich 320 nm ist, wobei sie vorzugsweise 266 nm beträgt,

- das Verfahren ein Lenken des Lichtimpulses (710) auf einen zweiten optischen Weg (800) umfasst, wobei

[A]

- der erste optische Weg (160) und der zweite optische Weg (800) parallel sind, oder

- der erste optische Weg (160) und der zweite optische Weg (800) derart aufeinander ausgerichtet sind, dass der Lichtstrahl (170) und der Lichtimpuls (710) an sämtlichen Punkten zwischen einer optischen Eintrittsstelle (130) und einer optischen Austrittsstelle (135) mindestens teilweise überlappen, oder

- der erste optische Weg (160) und der zweite optische Weg (800) derart aufeinander ausgerichtet sind, dass der Lichtstrahl (170) und der Lichtimpuls (710) eine mindestens teilweise Überlappung an sämtlichen Punkten zwischen einem ersten optischen Element (740) einem der folgenden zeigen: einem zweiten optischen Element (742), einer Linse (746) und einem ersten Photodetektor (320) und

[B]

- der Lichtstrahl (170) einen Querschnitt hat, wobei der Querschnitt eine erste Abmessung ($l_1$) und eine zweite Abmessung ($l_2$) hat, wobei die zweite Abmessung rechtwinklig zur ersten Abmessung ist, und

- der Querschnitt des Lichtimpulses (710) eine erste Abmessung ($d_1$) und eine zweite Abmessung ($d_2$) hat, wobei die zweite Abmessung rechtwinklig zur ersten Abmessung ist, und

- der Abstand (d) zwischen der Mittelachse des ersten optischen Weges (160) und der Mittelachse des zweiten optischen Weges (800) weniger als 25 % der kleineren der folgenden ausmacht: der kleineren Abmessung des Lichtstrahls (170) und der kleineren Abmessung des Lichtimpulses (710).

8. Vorrichtung (990) zum Messen des Alkalihalogenid-Gehalts von Rauchgas, wobei die Vorrichtung Folgendes umfasst

- eine Lichtstrahlenquelle (310), die derart angeordnet ist, dass sie einen Lichtstrahl (170) aussendet, der Photonen mit einer ersten Wellenlänge ($\lambda_1$) umfasst, und

- einen Photodetektor (320), wobei

- ein erster optischer Weg (160) optisch zwischen dem Photodetektor (320) und der Lichtstrahlenquelle (310) angeordnet ist,

- einen Raum (110), durch welchen der erste optische Weg (160) gemäß seiner Anordnung verläuft und welcher derart angeordnet ist, dass er Rauchgas enthält, das den Lichtstrahl (170) absorbiert,

- wobei der Lichtstrahl (170) derart angeordnet ist, dass er durch die Absorption des Lichtstrahls (170) zu einem abgeschwächten Lichtstrahl (175) abgeschwächt wird, und

- wobei der Photodetektor (320) derart angeordnet ist, dass er einen ersten Wert detektiert, welcher eine erste Intensität ($I_{k0}$) des abgeschwächten Lichtstrahls (175) angibt,

**dadurch gekennzeichnet, dass** die Vorrichtung (990) Folgendes umfasst

- eine Lichtimpulsquelle (700), wobei

- die Lichtimpulsquelle (700) derart angeordnet ist, dass sie einen Lichtimpuls (710) erzeugt, der Photonen mit einer zweiten Wellenlänge ($\lambda_2$) erzeugt, wobei mindestens ein Teil der Photonen eine Dissoziation mindestens eines Teils der Alkalihalogenid-Moleküle, die sich auf dem ersten optischen Weg (160) befinden, zu Alkaliatomen (520) und Halogenatomen (525) bewirkt, wobei der Lichtstrahl (170) durch Absorption an den Alkaliatomen, die sich auf dem ersten optischen Weg 160 befinden, eine weitere Abschwächung zu einem abgeschwächten Lichtstrahl (175) erfährt, und

- der Photodetektor (320) derart angeordnet ist, dass er einen zweiten Wert detektiert, welcher eine zweite Intensität ($I_k$) des abgeschwächten Lichtstrahls (175) angibt, und

- die Vorrichtung (990) eine Datenverarbeitungseinheit umfasst, die derart angeordnet ist, dass sie unter Verwendung des ersten Wertes und des zweiten Wertes den Alkalihalogenidgehalt des Rauchgases bestimmt.

9. Vorrichtung nach Anspruch 8, **dadurch gekennzeichnet, dass**

    - die erste Wellenlänge ($\lambda_1$) einem Absorptionsprofil des Alkaliatoms (520) entspricht, und
    - die zweite Wellenlänge ($\lambda_2$) kleiner oder gleich 420 nm ist.

10. Vorrichtung nach Anspruch 8 oder 9, **dadurch gekennzeichnet, dass** die Vorrichtung Folgendes umfasst

    - eine integrierte Lichtquelle (730), wobei die integrierte Lichtquelle (730) die Lichtstrahlenquelle (310) und die Lichtimpulsquelle (700) umfasst.

11. Vorrichtung nach beliebigen der Ansprüche 8 bis 10, **dadurch gekennzeichnet, dass**

    - es sich bei der Lichtstrahlenquelle (310) um einen Laser handelt, und
    - es sich bei der Lichtimpulsquelle (700) um einen Pulslaser handelt.

12. Vorrichtung nach beliebigen der Ansprüche 8 bis 11, **dadurch gekennzeichnet, dass** die Vorrichtung Folgendes umfasst

    - ein erstes optisches Element (740), wobei das erste optische Element (740) derart angeordnet ist, dass es

        -- den Lichtstrahl (170) auf einen ersten optischen Weg (160) lenkt, und
        -- den Lichtimpuls (710) auf einen zweiten optischen Weg (800) lenkt, wobei

        [A]

            - der erste optische Weg (160) und der zweite optische Weg (800) parallel sind, oder
            - der erste optische Weg (160) und der zweite optische Weg (800) derart aufeinander ausgerichtet sind, dass der Lichtstrahl (170) und der Lichtimpuls (710) an sämtlichen Punkten zwischen einer optischen Eintrittsstelle (130) und einer optischen Austrittsstelle (135) mindestens teilweise überlappen, oder
            - der erste optische Weg (160) und der zweite optische Weg (800) derart aufeinander ausgerichtet sind, dass der Lichtstrahl (170) und der Lichtimpuls (710) eine mindestens teilweise Überlappung an sämtlichen Punkten zwischen einem ersten optischen Element (740) einem der folgenden zeigen: einem zweiten optischen Element (742), einer Linse (746) und einem ersten Photodetektor (320), und

        [B]

            - der Lichtstrahl (170) einen Querschnitt hat, wobei der Querschnitt eine erste Abmessung ($l_1$) und eine zweite Abmessung ($l_2$) hat, wobei die zweite Abmessung rechtwinklig zur ersten Abmessung ist, und
            - der Querschnitt des Lichtimpulses (710) eine erste Abmessung ($d_1$) und eine zweite Abmessung ($d_2$) hat, wobei die zweite Abmessung rechtwinklig zur ersten Abmessung ist, und
            - der Abstand (d) zwischen der Mittelachse des ersten optischen Weges (160) und der Mittelachse des zweiten optischen Weges (800) weniger als 25 % der kleineren der folgenden ausmacht: der kleineren Abmessung des Lichtstrahls (170) und der kleineren Abmessung des Lichtimpulses (710);

    und die Vorrichtung (990) Folgendes umfasst
    - ein zweites optisches Element (742), wobei das zweite optische Element (742) derart angeordnet ist, dass es

        -- den abgeschwächten Lichtstrahl (175) dem Photodetektor (320) zuführt, und
        -- den abgeschwächten Lichtimpuls (715) umlenkt, reflektiert oder absorbiert.

13. Vorrichtung nach beliebigen der Ansprüche 8 bis 12, **dadurch gekennzeichnet, dass**

- es sich bei der Lichtstrahlenquelle (310) um einen Laser handelt, der derart angeordnet ist, dass er einen Lichtstrahl (170) mit der ersten Wellenlänge ($\lambda_1$) aussendet, welche einem Absorptionsmaximum von Kalium entspricht,
- die Lichtimpulsquelle (700) einen Pulslaser oder einen kontinuierlichen Laser umfasst, der derart angeordnet ist, dass er einen Lichtimpuls (710) mit einer zweiten Wellenlänge ($\lambda_2$) aussendet, die kleiner oder gleich 320 nm ist, wobei sie vorzugsweise 266 nm beträgt, und
- die Vorrichtung Folgendes umfasst
- ein erstes optisches Element (740), wobei das erste optische Element (740) derart angeordnet ist, dass es

    -- den Lichtstrahl (170) auf einen ersten optischen Weg (160) lenkt, und
    -- den Lichtimpuls (710) auf einen zweiten optischen Weg (800) lenkt, wobei

      [A]

        - der erste optische Weg (160) und der zweite optische Weg (800) parallel sind, oder
        - der erste optische Weg (160) und der zweite optische Weg (800) derart aufeinander ausgerichtet sind, dass der Lichtstrahl (170) und der Lichtimpuls (710) an sämtlichen Punkten zwischen einer optischen Eintrittsstelle (130) und einer optischen Austrittsstelle (135) mindestens teilweise überlappen, oder
        - der erste optische Weg (160) und der zweite optische Weg (800) derart aufeinander ausgerichtet sind, dass der Lichtstrahl (170) und der Lichtimpuls (710) eine mindestens teilweise Überlappung an sämtlichen Punkten zwischen einem ersten optischen Element (740) einem der folgenden zeigen: einem zweiten optischen Element (742), einer Linse (746) und einem ersten Photodetektor (320), und

      [B]

        - der Lichtstrahl (170) einen Querschnitt hat, wobei der Querschnitt eine erste Abmessung ($I_1$) und eine zweite Abmessung ($I_2$) hat, wobei die zweite Abmessung rechtwinklig zur ersten Abmessung ist, und
        - der Querschnitt des Lichtimpulses (710) eine erste Abmessung ($d_1$) und eine zweite Abmessung ($d_2$) hat, wobei die zweite Abmessung rechtwinklig zur ersten Abmessung ist, und
        - der Abstand (d) zwischen der Mittelachse des ersten optischen Weges (160) und der Mittelachse des zweiten optischen Weges (800) weniger als 25 % der kleineren der folgenden ausmacht: der kleineren Abmessung des Lichtstrahls (170) und der kleineren Abmessung des Lichtimpulses (710);

und die Vorrichtung Folgendes umfasst
- ein zweites optisches Element (742), wobei das zweite optische Element (742) derart angeordnet ist, dass es

    -- den abgeschwächten Lichtstrahl (175) dem Photodetektor (320) zuführt, und
    -- den abgeschwächten Lichtimpuls (710) umlenkt, reflektiert oder absorbiert.

**14.** Heizkessel (100), der Folgendes umfasst

    - Heizkesselwände (102), welche das Innere des Heizkessels (100) begrenzen, wobei das Innere derart angeordnet ist, dass es Rauchgase umfasst, und
    - eine optische Eintrittsstelle (130, 132, 140) in eine Heizkesselwand (102),

**dadurch gekennzeichnet, dass**

    - der Heizkessel die Vorrichtung nach beliebigen der Ansprüche 8 bis 13 umfasst,
    - das Innere des Heizkessels den Raum (110) umfasst, und
    - sich der erste optische Weg (160) von der optischen Eintrittsstelle (130, 132, 140) zu einer optischen Austrittsstelle (135, 132, 140) oder einem Reflektor (145) erstreckt; wobei der Reflektor (145) derart angeordnet ist, dass er mindestens einen Teil des Lichtstrahls (170) zur optischen Eintrittsstelle (130, 132, 140) reflektiert oder streut.

**15.** Heizkessel (100) nach Anspruch 14, wobei der Heizkessel (100) Folgendes umfasst

- einen Wärmetauscher (150),

**dadurch gekennzeichnet, dass**

- der Wärmetauscher (150) sich stromabwärts des ersten optischen Wegs (160) gemäß der Strömungsrichtung (123) des Rauchgases befindet.

**Revendications**

**1.** Procédé pour mesurer une teneur en halogénure de métal alcalin de gaz d'échappement, le procédé comprenant

- la génération d'un faisceau lumineux (170), le faisceau lumineux (170) comprenant des photons dotés d'une première longueur d'onde ($\lambda_1$),
- le guidage du faisceau lumineux (170) vers un premier chemin optique (160),
- le premier chemin optique (160) passant à travers un espace (110) contenant le gaz d'échappement, le faisceau lumineux (170) étant atténué en un faisceau lumineux atténué (175) et
- la détection d'une première valeur indicatrice d'une première intensité ($I_{k0}$) du faisceau lumineux atténué (175),

**caractérisé par**

- la génération d'une impulsion lumineuse (710), l'impulsion lumineuse (710) comprenant des photons dotés d'une deuxième longueur d'onde ($\lambda_2$),
- la dissociation d'au moins une partie des molécules d'halogénure de métal alcalin (510) sur le premier chemin optique (160) en atomes de métal alcalin (520) et en atomes d'halogène (525) à l'aide de l'impulsion lumineuse (710), le faisceau lumineux (170) étant en outre atténué en un faisceau lumineux atténué (175) par absorption dans les atomes de métal alcalin (520) sur le premier chemin optique (160),
- la détection d'une deuxième valeur indicatrice d'une deuxième intensité ($I_k$) du faisceau lumineux atténué (175), et
- la détermination, à l'aide de la première et de la deuxième valeur, de la teneur en halogénure de métal alcalin du gaz d'échappement.

**2.** Procédé selon la revendication 1, **caractérisé en ce que**

- la première longueur d'onde ($\lambda_1$) correspond à un profil d'absorption de l'atome de métal alcalin (520) et
- la deuxième longueur d'onde ($\lambda_2$) est inférieure ou égale à 420 nm.

**3.** Procédé selon la revendication 1 ou 2, **caractérisé par**

- la génération du faisceau lumineux (170) à l'aide d'une source (310) de faisceau lumineux comprenant un laser et
- la génération de l'impulsion lumineuse (710) à l'aide d'une source (700) d'impulsion lumineuse comprenant un laser.

**4.** Procédé selon l'une quelconque des revendications 1 à 3, **caractérisé en ce que**

- le faisceau lumineux (170) présente une première section transversale,
- l'impulsion lumineuse (710) présente une deuxième section transversale et
- la deuxième section transversale est supérieure à la première section transversale.

**5.** Procédé selon l'une quelconque des revendications 1 à 4, **caractérisé en ce que** le procédé comprend

- le guidage d'au moins une partie de l'impulsion lumineuse (710) vers un deuxième chemin optique (800) de telle manière que
- le premier chemin optique (160) et le deuxième chemin optique (800) sont parallèles ou
- le premier chemin optique (160) et le deuxième chemin optique (800) sont alignés de manière telle que le faisceau lumineux (170) et l'impulsion lumineuse (710) se chevauchent au moins partiellement sur tous les points entre une entrée optique (130) et une sortie optique (135) ou
- le premier chemin optique (160) et le deuxième chemin optique (800) sont alignés de manière telle que le faisceau lumineux (170) et l'impulsion lumineuse (710) se chevauchent au moins partiellement sur tous les points entre un premier élément optique (740) et l'un parmi : un deuxième élément optique (742), une lentille (746) et un premier photodétecteur (320).

**6.** Procédé selon la revendication 5, **caractérisé en ce que**

- le faisceau lumineux (170) présente une section transversale et la section transversale présente une première dimension ($l_1$) et une deuxième dimension ($l_2$), la deuxième dimension étant perpendiculaire à la première dimension,
- la section transversale de l'impulsion lumineuse (710) présente une première dimension ($d_1$) et une deuxième dimension ($d_2$), la deuxième dimension étant perpendiculaire à la première dimension et
- la distance (d) entre l'axe central du premier chemin optique (160) et l'axe central du deuxième chemin optique (800) est inférieure à 25% de la plus petite dimension parmi les suivantes : plus petite dimension du faisceau lumineux (170) et plus petite dimension de l'impulsion lumineuse (710).

**7.** Procédé selon l'une quelconque des revendications 1 à 6, **caractérisé en ce que**

- l'halogénure de métal alcalin est le chlorure de potassium (KCl), le procédé comprenant
- la génération du faisceau lumineux (170) à l'aide d'un laser de manière telle que la première longueur d'onde ($\lambda_1$) correspond à un pic d'absorption du potassium,
- la génération de l'impulsion lumineuse (710) à l'aide d'une source (700) d'impulsion lumineuse comprenant un laser de manière telle que la deuxième longueur d'onde ($\lambda_2$) est inférieure ou égale à 320 nm, de préférence 266 nm,
- le procédé comprend le guidage de l'impulsion lumineuse (710) vers un deuxième chemin optique (800),

[A]

- le premier chemin optique (160) et le deuxième chemin optique (800) étant parallèles ou
- le premier chemin optique (160) et le deuxième chemin optique (800) étant alignés de manière telle que le faisceau lumineux (170) et l'impulsion lumineuse (710) se chevauchent au moins partiellement sur tous les points entre une entrée optique (130) et une sortie optique (135) ou
- le premier chemin optique (160) et le deuxième chemin optique (800) étant alignés de manière telle que le faisceau lumineux (170) et l'impulsion lumineuse (710) se chevauchent au moins partiellement sur tous les points entre un premier élément optique (740) et l'un parmi : un deuxième élément optique (742), une lentille (746) et un premier photodétecteur (320) et

[B]

- le faisceau lumineux (170) présentant une section transversale et la section transversale présentant une première dimension ($l_1$) et une deuxième dimension ($l_2$), la deuxième dimension étant perpendiculaire à la première dimension et
- la section transversale de l'impulsion lumineuse (710) présentant une première dimension ($d_1$) et une deuxième dimension ($d_2$), la deuxième dimension étant perpendiculaire à la première dimension et
- la distance (d) entre l'axe central du premier chemin optique (160) et l'axe central du deuxième chemin optique (800) étant inférieure à 25% de la plus petite dimension parmi les suivantes : plus petite dimension du faisceau lumineux (170) et plus petite dimension de l'impulsion lumineuse (710).

**8.** Dispositif (990) pour mesurer une teneur en halogénure de métal alcalin de gaz d'échappement, le dispositif comprenant

- une source (310) de faisceau lumineux, conçue pour émettre un faisceau lumineux (170) comprenant des photons dotés d'une première longueur d'onde ($\lambda_1$) et
- un photodétecteur (320),
- un premier chemin optique (160) étant conçu optiquement entre le photodétecteur (320) et la source (310) de faisceau lumineux,

- un espace (110), à travers lequel le premier chemin optique (160) doit passer, est conçu pour contenir le gaz d'échappement absorbant le faisceau lumineux (170),
- le faisceau lumineux (170) étant conçu pour être atténué en un faisceau lumineux atténué (175) par ladite absorption du faisceau lumineux (170) et
- le photodétecteur (320) étant conçu pour détecter une première valeur indicatrice d'une première intensité ($I_{k0}$) du faisceau lumineux atténué (175),

**caractérisé en ce que** le dispositif (990) comprend

- une source (700) d'impulsion lumineuse,
- la source (700) d'impulsion lumineuse étant conçue pour générer une impulsion lumineuse (710) comprenant des photons dotés d'une deuxième longueur d'onde ($\lambda_2$), au moins une partie des photons dissociant au moins une partie des molécules d'halogénure de métal alcalin (510) sur le premier chemin optique (160) en atomes de métal alcalin (520) et en atomes d'halogène (525), le faisceau lumineux (170) étant en outre atténué en un faisceau lumineux atténué (175) par absorption dans les atomes de métal alcalin sur le premier chemin optique (160) et
- le photodétecteur (320) étant conçu pour détecter une deuxième valeur indicatrice d'une deuxième intensité ($I_k$) du faisceau lumineux atténué (175) et
- le dispositif (990) comprenant une unité de traitement de données conçue pour déterminer, à l'aide de la première et de la deuxième valeur, la teneur en halogénure de métal alcalin du gaz d'échappement.

9. Dispositif selon la revendication 8, **caractérisé en ce que**

- la première longueur d'onde ($\lambda_1$) correspond à un profil d'absorption de l'atome de métal alcalin (520) et
- la deuxième longueur d'onde ($\lambda_2$) est inférieure ou égale à 420 nm.

10. Dispositif selon la revendication 8 ou 9, **caractérisé en ce que** le dispositif comprend

- une source lumineuse intégrée (730), la source lumineuse intégrée (730) comprenant la source (310) de faisceau lumineux et la source (700) d'impulsion lumineuse.

11. Dispositif selon l'une quelconque des revendications 8 à 10, **caractérisé en ce que**

- la source (310) de faisceau lumineux est un laser et
- la source (700) d'impulsion lumineuse est un laser pulsé.

12. Dispositif selon l'une quelconque des revendications 8 à 11, **caractérisé en ce que** le dispositif comprend

- un premier élément optique (740), le premier élément optique (740) étant conçu
- pour guider le faisceau lumineux (170) vers un premier chemin optique (160) et
- pour guider l'impulsion lumineuse (710) vers un deuxième chemin optique (800),

[A]

- le premier chemin optique (160) et le deuxième chemin optique (800) étant parallèles ou
- le premier chemin optique (160) et le deuxième chemin optique (800) étant alignés de manière telle que le faisceau lumineux (170) et l'impulsion lumineuse (710) se chevauchent au moins partiellement sur tous les points entre une entrée optique (130) et une sortie optique (135) ou
- le premier chemin optique (160) et le deuxième chemin optique (800) étant alignés de manière telle que le faisceau lumineux (170) et l'impulsion lumineuse (710) se chevauchent au moins partiellement sur tous les points entre un premier élément optique (740) et l'un parmi : un deuxième élément optique (742), une lentille (746) et un premier photodétecteur (320) et

[B]

- le faisceau lumineux (170) présentant une section transversale et la section transversale présentant une première dimension ($l_1$) et une deuxième dimension ($l_2$), la deuxième dimension étant perpendiculaire à la première dimension et

- la section transversale de l'impulsion lumineuse (710) présentant une première dimension ($d_1$) et une deuxième dimension ($d_2$), la deuxième dimension étant perpendiculaire à la première dimension et
- la distance (d) entre l'axe central du premier chemin optique (160) et l'axe central du deuxième chemin optique (800) étant inférieure à 25% de la plus petite dimension parmi les suivantes : plus petite dimension du faisceau lumineux (170) et plus petite dimension de l'impulsion lumineuse (710) ;
et le dispositif (990) comprenant

- un deuxième élément optique (742), le deuxième élément optique (742) étant conçu
- pour faire passer le faisceau lumineux atténué (175) vers le photodétecteur (320) et
- pour dévier, réfléchir ou absorber l'impulsion lumineuse atténuée (715).

**13.** Dispositif selon l'une quelconque des revendications 8 à 12, **caractérisé en ce que**

- la source (310) de faisceau lumineux est un laser conçu pour émettre un faisceau lumineux (170) doté de la première longueur d'onde ($\lambda_1$) correspondant à un pic d'absorption du potassium,
- la source (700) d'impulsion lumineuse comprend un laser pulsé ou un laser continu conçu pour émettre une impulsion lumineuse (710) dotée d'une deuxième longueur d'onde ($\lambda_2$) inférieure ou égale à 320 nm, de préférence 266 nm, et
- le dispositif comprenant
- un premier élément optique (740), le premier élément optique (740) étant conçu
- pour guider le faisceau lumineux (170) vers un premier chemin optique (160) et
- pour guider l'impulsion lumineuse (710) vers un deuxième chemin optique (800),

[A]

- le premier chemin optique (160) et le deuxième chemin optique (800) étant parallèles ou
- le premier chemin optique (160) et le deuxième chemin optique (800) étant alignés de manière telle que le faisceau lumineux (170) et l'impulsion lumineuse (710) se chevauchent au moins partiellement sur tous les points entre une entrée optique (130) et une sortie optique (135) ou
- le premier chemin optique (160) et le deuxième chemin optique (800) étant alignés de manière telle que le faisceau lumineux (170) et l'impulsion lumineuse (710) se chevauchent au moins partiellement sur tous les points entre un premier élément optique (740) et l'un parmi : un deuxième élément optique (742), une lentille (746) et un premier photodétecteur (320) et

[B]

- le faisceau lumineux (170) présentant une section transversale et la section transversale présentant une première dimension ($l_1$) et une deuxième dimension ($l_2$), la deuxième dimension étant perpendiculaire à la première dimension et
- la section transversale de l'impulsion lumineuse (710) présentant une première dimension ($d_1$) et une deuxième dimension ($d_2$), la deuxième dimension étant perpendiculaire à la première dimension et
- la distance (d) entre l'axe central du premier chemin optique (160) et l'axe central du deuxième chemin optique (800) étant inférieure à 25% de la plus petite dimension parmi les suivantes : plus petite dimension du faisceau lumineux (170) et plus petite dimension de l'impulsion lumineuse (710) ;

et le dispositif comprenant
- un deuxième élément optique (742), le deuxième élément optique (742) étant conçu
- pour faire passer le faisceau lumineux atténué (175) vers le photodétecteur (320) et
- pour dévier, réfléchir ou absorber l'impulsion lumineuse atténuée (710).

**14.** Chaudière (100) comprenant :

- des parois de chaudière (102) limitant l'intérieur de la chaudière (100), l'intérieur étant conçu pour comprendre des gaz d'échappement et
- une entrée optique (130, 132, 140) dans une paroi de chaudière (102),

**caractérisée en ce que**

- la chaudière comprend le dispositif selon l'une quelconque des revendications 8 à 13,
- l'intérieur de la chaudière comprend l'espace (110) et
- le premier trajet optique (160) s'étend depuis l'entrée optique (130, 132, 140) vers l'un parmi une sortie optique (135, 132, 140) et un réflecteur (145) ; le réflecteur (145) étant conçu pour réfléchir ou diffuser au moins une partie du faisceau lumineux (170) vers l'entrée optique (130, 132, 140).

15. Chaudière (100) selon la revendication 14, la chaudière (100) comprenant

- un échangeur de chaleur (150),

**caractérisée en ce que**

- l'échangeur de chaleur (150) est situé en aval du premier chemin optique (160) dans le sens (123) du flux de gaz d'échappement.

Fig. 1a

Fig. 1b

Fig. 2a

Fig. 2b

Fig. 2c

Fig. 2d

Fig. 3

Fig. 4a

Fig. 4b

Fig. 4c

Fig. 6

Fig. 7

990

310

170, $\lambda_1$

102

140

800, 710, $\lambda_2$

110

160

700

α

102

140

175, $\lambda_1$

320

# Fig. 8

990

310

170, $\lambda_1$

744

740

700

102

140d1

710, $\lambda_2$

722

110

160 800

L

715, $\lambda_2$

720

102

140d2

742

175, $\lambda_1$

746

# Fig. 9a

320

910

170, $\lambda_1$

310

700

710, $\lambda_2$

900

## Fig. 9b

102

744   722

310

740   170

710, $\lambda_2$

700

140d1

160 800

L

990

Signal

Power

110

140d2

720

742

715, $\lambda_2$

175, $\lambda_1$

320   746

## Fig. 9c

Fig. 9d

730

310   700

170         710

148

170    710

## Fig. 10a

730

310 700

732

170    710

## Fig. 10b

510

hc/$\lambda_2$

515

KCl

512

K   520

Cl   525

## Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0127593 A

**Non-patent literature cited in the description**

- **E SCHLOSSER et al.** In situ detection of potassium atoms in high temperature coal-combustion systems using near-infrared-diode lasers. *SPECTROCHIMICA ACTA PART A: MOLECULAR AND BIOMOLECULAR SPECTROSCOPY,* 01 September 2002, vol. 58 (11), ISSN 1386-1425, 2347-2359

- **MONKHOUSE, P.** On-line spectroscopic and spectrometric methods for the determination of metal species in industrial processes. *PROGRESS IN ENERGY AND COMBUSTION SCIENCE,* 23 June 2010, vol. 37 (2), 125-171